# EUROPÄISCHE PATENTSCHRIFT

(11) **EP 1 713 612 B1**
(45) Veröffentlichungstag und Bekanntmachung des Hinweises auf die Patenterteilung: **20.03.2013**
(21) Anmeldenummer: 05700311.3
(22) Anmeldetag: 14.01.2005
(51) Int. Cl.: B23K 26/28, B23K 33/00, B21D 51/26

(54) **VERFAHREN UND VORRICHTUNG ZUM HERSTELLEN EINES DOSENKÖRPERS, SOWIE DOSENKÖRPER**
METHOD AND DEVICE FOR PRODUCING A CAN BODY AND CAN BODY
PROCEDE ET DISPOSITIF POUR PRODUIRE UN CORPS DE BOITE, ET CORPS DE BOITE

(30) Priorität: 15.01.2004 CH 542004; 17.06.2004 WO PCT/CH2004/000368
(43) Veröffentlichungstag der Anmeldung: 25.10.2006
(73) Patentinhaber: CREBOCAN AG, 9606 Bütschwil (CH)
(72) Erfinder: BOLTSHAUSER, Werner, CH-9606 Bütschwil (CH)
(74) Vertreter: Büchel, von Révy & Partner
(86) Internationale Anmeldenummer: PCT/CH2005/000016
(87) Internationale Veröffentlichungsnummer: WO 2005/068127

(56) Entgegenhaltungen:
- EP-A- 0 208 564
- WO-A-02/42196
- WO-A-02/092466
- WO-A-2005/000498
- DE-A1- 2 456 097
- US-A- 2 444 465
- US-A- 5 186 592

## Beschreibung

Die Erfindung bezieht sich auf ein Verfahren nach dem Oberbegriff des Anspruches 1, auf eine Vorrichtung nach dem Oberbegriff des Anspruches 17 und auf einen Dosenkörper nach dem Oberbegriff des Anspruches 12.

Gefässe mit metallischen Wänden bzw. mit Mantel und Boden, insbesondere Aerosoldosen mit einem Dekor, sind ein- oder mehrteilig ausgebildet. Bei einteiligen Aerosol-Aludosen wird der zylindrische Dosenkörper mittels Kaltfliesspressen bereitgestellt. Anschliessend wird am offenen Ende mittels stauchender Verengung ein Ventilsitz ausgebildet. Dieses Herstellungsverfahren ist aufgrund der für die vielen Bearbeitungsschritte benötigten Anlage und dem Wasser- sowie Energiebedarf für Reinigung und Trocknung sehr aufwendig. Die US 4 095 544 und die EP 0 666 124 A1 beschreiben das Herstellen nahtfreier Stahldosen. Dabei wird der zylindrische Dosenkörper mittels Stanzen, Pressen und Abstrecken aus einem mit Zinn bzw. mit Kunststoff beschichteten Stahlblech hergestellt. Es hat sich gezeigt, dass beim Ausbilden von verengten Halsteilen enorme Probleme auftreten, weil die Materialstruktur durch das Abstrecken verändert bzw. verhärtet ist.

Stark verbreitet sind auch Dosen aus Stahlblech, bei denen der Mantel eine LängsSchweissnaht aufweist. Der Boden und der obere Abschluss sind über Falzverbindungen am Dosenmantel befestigt. Bei Falzverbindungen können Dichtungsprobleme auftreten, die etwa mit Dichtungsringen reduziert werden. Bei den gängigen äusserst dünnwandigen Dosen ergeben sich mit stirnseitig angeordneten Dichtungen Probleme. Um die Dichtungsringe weglassen zu können und um den hohen Materialbedarf für die Falzverbindung zu reduzieren, wird in der WO 02/42196 vorgeschlagen, den Deckel einer gefüllten Getränkedose mittels Laserschweissen am Dosenmantel zu befestigen. Dabei werden der obere Rand des Mantels und der äussere Rand des Deckels mit gleich ausgerichteten Stirnseiten aneinander gelegt, bei den Stirnseiten miteinander verschweisst und zur Vermeidung von scharfen Kanten umgerollt. Gegebenenfalls wird lediglich der äussere Rand des Deckels oder des Mantels umgerollt, so dass der Deckel bzw. der Mantel aussen und innen an den Mantel bzw. Deckel anliegt und dabei die Stirnseite des einen Teils vom umgeformten Rand des anderen Teiles umgriffen ist. In der endgültigen Ausbildung der Verbindung liegen somit immer zumindest drei Materiallagen aneinander an, was zu einem unerwünschten, erhöhten Materialbedarf und einer für viele Anwendungen unerwünschten Erscheinung als Falzverbindung führt.

Aus den Schriften EP 200 098 A2 und EP 208 564 sind weitere Ausführungsformen von zwei- und mehrteilige Dosen bekannt, bei denen ein Boden oder ein oberer Abschlussteil mittels Laserschweissen am Dosenmantel befestigt wird. Die beschriebenen Laser-Schweissnähte zwischen Dosenwand und Boden bzw. oberem Abschlussteil erlauben keine kostengünstige Produktion mit genügenden hohen Stückzahlen pro Zeiteinheit und/oder weisen bei den Verbindungsbereichen unattraktive Formgestaltungen auf. Bei Ausführungen mit gleich ausgerichteten nach aussen stehenden Stirnseiten des Dosenmantels und des Abschlussteiles entstehen störende scharfe Kanten, welche umgefalzt oder umgerollt werden müssen, wodurch ein unerwünscht erhöhter Materialbedarf und für viele Anwendungen eine unerwünschte Erscheinung als Falzverbindung entsteht.

Ausführungen gemäss der EP 200 098 A2 bei denen ein zylindrischer Bereich des Bodens gestossen oder überlappend mit dem zylindrischen Endbereich des Dosenmantels verbunden werden muss, wären nur bei genügend grossen Materialdicken und bei einer äusserst hohen Fertigungs- und Zuführgenauigkeit möglich. Bei sehr dünnem Dosenmaterial ist ein spaltfreies Zusammenführen der ineinander oder aufeinander treffenden zylindrischen Bereiche bzw. deren Stirnseiten kaum möglich, weil bereits kleine Umfangsunterschiede ein exaktes Aufeinandertreffen verhindern. Wenn in einem kleinen Teilbereich der Umfangslinie die beiden zylindrischen Endbereiche, insbesondere die Stirnflächen, nicht exakt aneinander anliegen, so kann auch keine dichte Laser-Schweissnaht ausgebildet werden. Die in der EP 200 098 A2 beschriebene Vorrichtung, bei der im zylinderförmigen Dosenmantel ein Spreizkörper angeordnet ist, kann Umfangsunterschiede und die damit verbundenen Luftbereiche bei der zu erstellenden Naht nicht beheben. Beim Spreizen wird der Dosenmantel von mindestens zwei nach aussen bewegbaren Formteilen in eine der Aussenberandung der Formteile entsprechende Form gebracht. In Umfangsrichtung liegen zwischen den Formteilen Zwischenräume in denen der Dosenmantel nicht abgestützt ist. Diese in Umfangsrichtung unterbrochene Stützfläche kann ein luftfreies aneinander Anliegen der zu verschweissenden dünnwandigen Zylinderbereiche nicht mit Sicherheit gewährleisten. Geschlossene Nahtlinien zwischen zylindrischen Verbindungsbereichen können daher bei Dosen mit dünnen Blechen nicht, oder zumindest nicht mit kleinem Aufwand und grosser Geschwindigkeit, exakt und dicht hergestellt werden. Zudem ist die Schweissnaht auf der Doseninnenseite nicht abgedichtet, so dass eine Korrosion nicht ausgeschlossen werden kann. Dies schränkt die Verwendbarkeit der Dose auf nicht korrosive Inhaltsstoffe ein. Ein weiterer Nachteil besteht darin, dass eine Schweissnaht am zylindrischen Dosenmantel das Erscheinungsbild der Dose beeinträchtigt, bzw. ein nachträgliches Anbringen des die Schweissnaht überdeckenden Dekors an der zylindrischen Dosenaussenfläche nötig macht.

Die Schriften WO02/42196A2 WO02/092466A1 und US 5 186 592 zeigen Verbindungen zwischen einteiligen bzw. becherförmigen Dosenkörpern und oberen Dosenabschlüssen. Weil diese Verbindungen nach aussen stehende Randbereiche aufweisen, sind sie unerwünscht. Zudem sind einteilige becherförmigen Dosenkörpern in der Herstellung aufwändig.

Die bekannten Längsschweissnähte, insbesondere auch die aus der EP 208 564 und der US 4 341 943 bekannten Laser-Schweissnähte, weisen in Umfangsrichtung Stufen bzw. Dickenunterschiede auf, welche bei der Verengung des Halsteils oder beim Einsetzen eines Bodens bzw. eines oberen Abschlussteiles zu Problemen führen. Bei diesen Stufen kann ein dichter Abschluss, bzw. eine dichte Verbindung zu einem Abschlussteil, nur erschwert erzielt werden. Die Stufen sind auch aus ästhetischen Gründen unerwünscht und können bei Dosen, die noch mit einer Folie beschichtet werden, zu Problemen führen. Beim Verschweissen überlappter Verbindungsbereiche besteht die Gefahr, dass die Überlappung und damit der Umfang leicht variiert. Für eine exakte Überlappung müssen aufwendige Halterungsvorrichtungen mit Anschlagsflächen direkt bei der Schweissnaht eingesetzt werden, welche störanfällig sind. Bei dünnen Blechen mit einer Kunststoff-Innenbeschichtung als Korrosionsschutz wird die Beschichtung durch den Schweissvorgang beschädigt und der Korrosionsschutz ist nicht mehr gewährleistet.

Aus ästhetischen Gründen und zur Kennzeichnung des Inhaltes wird an der Aussenseite der Mantelfläche ein Dekor angebracht. Um auf ein aufwendiges und unflexibles direktes Bedrucken der Dosenkörper verzichten zu können, werden gemäss bekannter Lösungen bedruckte Folien auf den Dosenkörper aufgebracht. Gemäss der EP 0 525 729 wird eine Dekorfolie in Umfangsrichtung direkt auf den Dosenkörper aufgewickelt und am Dosenkörper zu einer geschlossenen Folienhülle verbunden. Das Abtrennen und das Aufbringen eines Folienstückes auf den Dosenkörper ist bei dünnen Folien sehr schwierig, bzw. mit Problemen verbunden. Aus den Schriften US 4 199 851, DE 197 16 079 und EP 1 153 837 A1 sind Lösungen bekannt, bei denen schrumpffähiges Kunststoff-Flachmaterial um einen Wickeldorn gewickelt, zu geschlossenen Hüllen ausgebildet und als Rundum-Etiketten in axialer Richtung auf Flaschen bzw. Dosen geschoben und fest geschrumpft wird. Das Verschieben der Rundum-Etiketten über die Flaschen bzw. Dosen ist insbesondere bei dünnen Folien mit einer hohen Verformungs- und Beschädigungsgefahr verbunden. Nebst den Betätigungs- und den Reibungskräften können reibungsbedingte elektrostatische Ladungen und damit verbundene variable, auf die Folie wirkende elektrostatische Kräfte auftreten, so dass ein schnelles Übertragen der zylinderförmig geschlossene Folie äusserst störanfällig ist.

Die bekannten Lösungen zum Herstellen von Dosen verwenden aufwendige Anlagen. Die Dosen können daher nicht bei den Abfüll-Betrieben hergestellt werden. Es entsteht ein grosser Transportaufwand, um die leeren Dosen vom Dosenhersteller zu Abfüll-Betrieben zu transportieren. Die bekannten Verfahren bei denen die Dosenkörper mit Laserschweissnähten ausgebildet werden, sind nicht geeignet für vielfältig formbare Dosenkörper aus dünnem Flachmaterial, bzw. umfassen einen grossen Materialanteil in nach aussen stehenden Verbindungsbereichen. Bei dünnem Dosenmaterial ist es gemäss dem Stande der Technik nicht mit vertretbarem Aufwand möglich, die zu verbindenden Randbereiche entlang der Nahtlinie luftfrei zusammen zu bringen.

Der vorliegenden Erfindung liegt die Aufgabe zugrunde, eine Lösung zu finden mit der ästhetisch attraktive Dosen kostengünstig und mit einfachen Anlagen hergestellt werden können.

Diese Aufgabe wird durch die Merkmale des Anspruches 1 des Anspruches 12, sowie des Anspruchs 17 gelöst. Die abhängigen Ansprüche beschreiben bevorzugte bzw. alternative Ausführungsformen. Unter Dosenkörpern sollen alle Gefässe, insbesondere Aerosoldosen, Getränkedosen aber auch Tuben und gefässförmige Zwischenprodukte verstanden werden.

Beim Lösen der Aufgabe wurde in einem ersten erfinderischen Schritt erkannt, dass die Schweissverbindungen zwischen dem Dosenmantel und einem daran angeordneten Abschlussteil nicht an nach aussen stehenden Randbereichen, bzw. nicht an Randbereichen bei denen beide Stirnseiten ausserhalb des Doseninneren angeordnet sind, ausgebildet werden sollen. Es soll die Stirnseite eines der beiden miteinander zu verschweissenden Randbereiche ausserhalb der Dosenberandung und die Stirnseite des anderen Randbereiches im Doseninnern angeordnet sein. Die Schweissverbindung zwischen dem Dosenmantel und einem daran angeordneten Abschlussteil wird mit minimalem Materialbedarf als überlappende Verbindung ausgebildet.

In einem zweiten erfinderischen Schritt wurde erkannt, dass eine Schweissnaht zwischen dünnen Blechen dann besonders effizient und mit äusserst hoher Qualität ausgebildet werden kann, wenn die miteinander zu verbindenden Naht-Kontaktflächen in der zu schweissenden Position einen gegenseitigen Anschlag bilden. Dadurch ist im zusammengepressten Zustand gewährleistet, dass die Naht-Kontaktflächen luftfrei aneinander anliegen.

Bei einer ringförmig geschlossenen Abschlussnaht zwischen dem geschlossenen Dosenmantel und einem sich quer zur Mantelachse erstreckenden Abschlussteil werden die Naht-Kontaktflächen als von der Zylinderform abweichende, sich in Richtung der Zylinderachse verengende bzw. aufweitende Ringflächen ausgebildet. Beim Zusammendrücken der zu verbindenden Teile gelangt eine verengte auf eine entsprechend aufgeweitete geschlossene Fläche, welche beiden Flächen bis zum aneinander Anliegen der Naht-Kontaktfläche mit gleichem Umfang zusammen gestossen werden können. Diese Position entspricht dem gegenseitigen Anschlag, an dem ein luftfreies aneinander Anstehen der Naht-Kontaktflächen gewährleistet ist.

In einem dritten erfinderischen Schritt wurde erkannt, dass zumindest ein Randbereich mit einer Naht-Kontaktfläche bei der Bewegung zum gegenseitigen Anschlag von einer sich über die Ausdehnung der gesamten Naht erstreckende Führungsfläche geführt werden soll, wobei der geführte Randbereich gegen die Führungsfläche gehalten werden muss. Durch diese geführte Bewegung an den gegenseitigen Anschlag wird gewährleistet, dass im gegenseitigen Anschlag ein luftfreier Kontakt zwischen den Naht-Kontaktflächen gewährleistet ist.

Bei einer ringförmig geschlossenen Abschlussnaht zwischen dem geschlossenen Dosenmantel und dem sich quer zur Mantelachse erstreckenden Abschlussteil wird die Führungsfläche vom verengten bzw. aufgeweiteten Randbereich des einen Teiles gebildet. Der Randbereich des anderen Teiles ist der geführte Randbereich, welcher durch die zum Zusammenpressen der beiden Teile angewendete Kraft zumindest von einer Position kurz vor dem Erreichen des Anschlages bis zum Erreichen des Anschlages gegen die Führungsfläche gehalten wird. Am gegenseitigen Anschlag können die beiden Teile mit einer ringförmig geschlossenen Schweissnaht dicht verbunden werden.

Bei einer bevorzugten Ausführungsform wird die Dosenlängsnaht, mit der der Dosenmantel geschlossen wird, als gestossene Naht ausgebildet. Dabei werden beide miteinander zu verbindenden seitlichen Randbereiche auf je einer Führungsteilfläche geführt, wobei die Führungsteilflächen aufeinander ausgerichtet sind und sich über die gesamte Länge der Längsnaht erstrecken. Damit auch die Stirnseiten dünner Randbereiche exakt aufeinander treffen, werden beide Randbereichte gegen die Führungsteilflächen gehalten. Indem mindestens ein Randbereich an der Führungsteilfläche zum Anschlag am anderen Randbereich bewegt wird, kann ein exaktes Zusammentreffen der Stirnflächen beider Randbereiche gewährleistet werden. Am gegenseitigen Anschlag kann der Schweissvorgang durchgeführt werden.

Um auf das Anordnen von Führungsflächen der Bearbeitungsvorrichtung im Innern des Dosenmantels zu verzichten, werden Teilflächen der Innenseite des Dosenmantels als Führungsteilflächen verwendet werden. Bei einem flachgedrückten Dosenmantel können beispielsweise die den beiden zu verbindenden Randbereichen am Dosenmantel gegenüberliegenden Bereiche als ebene Führungsteilflächen ausgebildet werden. Im Bereich der zu schweissenden Naht ist zwischen den beiden Führungsteilflächen eine von den zu verbindenden Randbereichen wegführende Vertiefung, bzw. ein vom Mantel nach aussen stehender Bereich ausgebildet, so dass beim Schweissvorgang eine Verbindung mit den Führungsteilflächen vermieden wird. Die aneinander anliegenden ebenen Teilflächen sind über Krümmungsbereiche miteinander verbunden. Damit beim Aufweiten des flach gedrückten Dosenmantels in radialer Richtung am Dosenmantel keine Risse oder unerwünschte Wülste entstehen, wird im flach gedrückten Zustand eine Form mit kleinen Krümmungsradien aber ohne Falten gewählt. Zwischen den beiden Krümmungsbereichen ist der Dosenmantel im Wesentlichen flachgedrückt, so dass beim Schweissen durch ein gezieltes Pressen in zumindest einem Krümmungsbereich das Zusammenpressen der Stirnflächen einfach gewährleistet werden kann.

Nach dem Ausbilden der Dosenlängsnaht können die flachgedrückten Dosenmäntel Platz sparend gelagert oder transportiert werden. Vor dem Anbringen des Bodens oder eines oberen Abschlusselementes wird der Dosenmantel in radialer Richtung in eine zylindrische Form aufgeweitet und an den Stirnseiten mit in Achsrichtung aufgeweiteten oder verengten Endbereichen versehen. An den aufgeweiteten oder verengten Endbereichen werden der Boden und das obere Abschlusselement fest geschweisst.

Zur Ausbildung der Naht können verschiedene Schweissverfahren eingesetzt werden. Vorzugsweise aber wird die Naht mittels Laserschweissen hergestellt. Das Flachmaterial muss somit zumindest eine metallische Laser schweissbare Schicht umfassen. Meist werden Stahlbleche verwendet, welche gute Verformungseigenschaften haben und günstig mit der gewünschten Dicke bezogen werden können.

Beim beschriebenen Verfahren zum Herstellen von geschlossenen Dosenmänteln kann sowohl von Flachmaterial ab Rolle als auch von Bögen bzw. Tafeln ausgegangen werden. Bei der Verarbeitung von Tafeln werden zuerst Abschnitte mit der Grösse eines Dosenmantels abgetrennt. Aus diesen Abschnitten kann der flachgedrückte Dosenmantel mit den beiden Krümmungsbereichen mittels Pressen in eine Form und weiterem Umlegen der einander zuzuführenden Randbereiche bereitgestellt werden. Bei der Verarbeitung des bandförmigen Flachmaterials werden gegebenenfalls im flachen Band senkrecht zur Bandachse zwei Einschnitte im Band ausgebildet. Diese Einschnitte werden so angeordnet, dass sie nach einem Umformschritt des Bandes in den Krümmungsbereichen des flachgedrückten endlos Dosenmantels liegen. Dadurch kann beim Abtrennen der gewünschten Dosenmantelabschnitte das Schneiden auf den flachgedrückten Bereich beschränkt werden. Der Umformschritt wird mittels Umformelementen durchgeführt, welche auf das kontinuierlich vorgeschobene Bandmaterial wirken. Die Längsnaht kann sowohl an nacheinander durchlaufenden Abschnitten oder am zusammenhängenden Bandmaterial ausgeführt werden.

Zum Abtrennen der Dosenmantelabschnitte vom Bandmaterial wird gegebenenfalls ein Sägeverfahren eingesetzt. Dabei wird ein Trennmittel, wie eine Trennscheibe oder ein Sägeband, während des Sägevorganges mit dem entstehenden Rohr mitgeführt. Nach dem Abtrennen eines Rohrabschnittes wird das Trennmittel zurückgestellt. Aufgrund der kurzen Abschnitte bzw. der kleinen Dosenhöhen sind die bekannten Trennvorrichtungen mit Nachteilen behaftet, weil sie nicht schnell trennen und rückstellen können. Ein weiterer Nachteil der bekannten Trennvorrichtungen besteht darin, dass beim Trennen besonders dünnwandiger Rohre die Gefahr der Verformung und damit des Verklemmens besteht. Zudem entstehen bei den bekannten Trennverfahren Sägespäne, welche zusätzliche Reinigungsschritte notwendig machen würden und/oder bei den weiteren Dosenherstellungsschritten Probleme machen könnten.

Gemäss der DE 1 452 556 kann ein schnelles und sauberes Abtrennen gewährleistet werden, wenn das flach gedrückte Dosenmantel-Bandmaterial mit vorgeschnittenen Krümmungsbereichen auf einer Unterlage geführt wird, die mit einer Schneidkante zusammenwirken kann. Sobald die gewünschte Länge des Rohrabschnittes vorgeschoben ist, wird die Schneidkante schneidend durch die aneinander anliegenden Wandbereiche des Rohres durch bewegt. Beim Schneiden entstehen keine Späne und der Schneidvorgang ist äusserst schnell.

Bei der Suche nach einem alternativen Schneidvorgang zum Abtrennen von Dosenmänteln vom kontinuierlich mittels einer Längsschweissnaht hergestellten Wandmaterial wurde eine Lösung gefunden, die auch unabhängig von der Verbindung zwischen dem Dosenmantel und einem Abschlusselement neu und erfinderisch ist. Bei dieser Lösung wird im Innern des kontinuierlich gebildeten Dosenmantel-Bandes bzw. des Wandmaterials eine Stützkante bereitgestellt. Die Stützkante ist im Wesentlichen kreisförmig geschlossen, verläuft in einer Normalebene zur Längsachse des Wandmaterials und liegt direkt an der Innenseite des Wandmaterials an. Dieser Stützkante ist mindestens ein Schneidwerkzeug, vorzugsweise ein Schneidring, zugeordnet, welche Werkzeuge beim Schneiden exzentrisch zur Schneidkante gedreht werden, so dass sich mindestens ein Schneidbereich einmal um das Wandmaterial dreht und dabei einen Abschnitt des Wandmaterials abtrennt. Während des Schneidvorganges bewegen sich die Stützkante und der Schneidring bzw. die Schneidelemente mit dem Wandmaterial mit. Nach dem Schneidvorgang wird der Schneidring, bzw. werden die Schneidelemente, in eine konzentrische Lage zur Stützkante gebracht und zusammen mit der Stützkante in Richtung der Längsachse gegen die Bewegung des Wandmaterials zurück zur Ausgangslage vor dem Schneidvorgang gebracht um anschliessend einen weiteren Schneidvorgang durchzuführen. Für diesen Schneid- und Rückstellvorgang kann der Schneidring kontinuierlich gedreht werden. Der Schneidring muss im richtigen Takt von der konzentrischen in die exzentrische Lage verstellt werden.

Weil das Wandmaterial beim Schweissen der Längsnaht flach gedrückt ist, muss zwischen der Schweissvorrichtung und der Stützkante im Innern des Wandmaterials ein Aufweitungselement angeordnet sein, welches das flachgedrückte Wandmaterial in den kreisförmigen Querschnitt der Stützkante umformt. Das Aufweitungselement kann an zwei Haltestangen, die in den seitlichen Krümmungsbereichen des flachgedrückten Wandmaterials geführt sind, befestigt werden. Diese beiden Haltestangen erstrecken sich vom Aufweitungselement bis in einen Bereich, in dem, das Wandmaterial noch nicht geschlossen ist und die Stangen somit mit Halteteilen ausserhalb des Wandmaterials verbindbar sind. Die Stützkante ist in Längsrichtung bewegbar am Aufweitungselement gelagert, wobei die Bewegung der Stützkante mit der Längsbewegung des Schneidringes gekoppelt ist.

Bei dieser neuen Schneidlösung kann auf vorgängig ins Bandmaterial eingebrachte Einschnitte verzichtet werden. Sie ermöglicht auch bei äusserst dünnem Flachmaterial ein verformungsfreies Abtrennen.

Wenn das Ausgangsmaterial - die Tafeln oder das Band - mit einer Dekorfolie und/oder einer Innenfolie versehen ist, so kann die Folie beim Schneiden der offenen oder geschlossenen Mantelabschnitte direkt zusammen mit dem stabilitätsgebenden Teil des Dosenmantels abgetrennt werden. Dadurch kann auf ein separates Abtrennen von dünnen Folienstücken verzichtet werden.

Wenn die Innenfolie bereits vor dem Ausbilden der Längsnaht auf das Metallblech aufgebracht wird, so kann mit zusätzlichen Bearbeitungsschritten eine im Bereich der Schweissnaht beschädigte Innenfolie ergänzt werden, so dass ein vollständiger Korrosionsschutz gewährleistet ist. Dazu wird etwa auf das Bandmaterial oder auf die Tafeln im Bereich der oben erwähnten Vertiefung zwischen den beiden Führungsteilflächen ein Abdeckband angeordnet. Nach dem Schweissvorgang kann die Vertiefung mit dem Abdeckband gegen die Schweissnaht gedrückt und dort so fest gesetzt werden, dass es beidseits an der intakten Innenfolie fest gesiegelt ist.

Gemäss einer weiteren Ausführungsform wird vor dem Umformen und Schweissen der Längsnaht an mindestens einem seitlichen Randbereich des Dosenmantel-Flachmaterials ein Band bzw. eine Längswulst eines schmelzbaren Dichtungsmaterials angebracht. Nach dem Umformen des Flachmaterials und dem Ausbilden der Schweissnaht wird diese Wulst durch Erwärmen zum teilweisen Schmelzen und Fliessen gebracht, so dass sich eine Brücke zwischen den seitlichen Rändern der Innenfolie bildet. Diese Brücke deckt die Schweissnaht auf der Doseninnenseite vollständig ab, so dass eine Korrosion im Bereich der Nahtinnenseite ausgeschlossen werden kann. Die Längswulst besteht vorzugsweise aus thermoplastischem Polyester. Der Schmelzpunkt des bevorzugten Materials liegt beispielsweise in einem Bereich von 150 bis 220°C.

Bei den ringförmig geschlossenen Schweissnähten zwischen dem Dosenmantel und dem Boden bzw. dem oberem Abschlusselement muss bei Bedarf auch ein Korrosionsschutz bereitgestellt werden können. Versuche haben gezeigt, dass ein Boden bzw. ein Abschlusselement auf der dem Doseninneren zugewandten Seite mit einer genügend dicken Koststoffbeschichtung versehen werden kann, so dass diese Kunststoffschicht beim Schweissen zumindest teilweise bestehen bleibt. Das Schweissen erfolgt von aussen her und führt zum Verschmelzen des metallischen Nahtbereiches des Dosenmantels mit dem entsprechenden metallischen Nahtbereich des Bodens bzw. des Abschlusselementes. Die Kunststoffbeschichtung im Bereich der Schweissstelle wird zumindest teilweise verdampft. Mit einer Innenbeschichtung erhöhter Mächtigkeit kann bereits gewährleistet werden, dass eine minimale Beschichtung bestehen bleibt. Wenn sich die Innenbeschichtung bis über die Stirnfläche des Bodens bzw. des Abschlusselementes erstreckt, so ist auch nach dem fertig Stellen des Dosenkörpers kein metallisches Material vom Doseninnern her direkt zugänglich und der Korrosionsschutz ist ohne weitere Massnahmen gewährleistet.

Analog zur inneren Abdichtung der Längsnaht mit einem schmelz- und dabei über die Naht fliessfähigen Material, vorzugsweise einem thermoplastischen Polyester, kann auch bei der Ringnaht zwischen dem Dosenmantel und einem Abschlusselement mit dem gleichen Material und Vorgehen abgedichtet werden. Dabei wird am Abschlusselement entlang des äusseren Randbereiches eine Ringwulst eines schmelzbaren Dichtungsmaterials angebracht. Nach dem Ausbilden der kreisförmigen Schweissnaht wird diese Ringwulst durch Erwärmen zum teilweisen Schmelzen und Fliessen gebracht, so dass sich eine Brücke zwischen der Innenbeschichtung des Abschlusselementes und der Innenfolie des Mantels bildet. Diese Brücke deckt die Stirnseite des im Doseninnern liegenden Randbereiches und bei Bedarf auch die Schweissnaht auf der Doseninnenseite vollständig ab, so dass eine Korrosion im Übergangsbereich vom Dosenmantel zum Abschlusselement ausgeschlossen werden kann.

Nach dem oben beschriebenen Einsetzen des Dosenbodens und gegebenenfalls eines obern Abschlusselementes hat der Dosenkörper gegebenenfalls noch nicht die endgültige Form. Weil aber die Laserscheissnähte gut verformbar sind, kann die gewünschte Endform beispielsweise mit einem Blähvorgang in einer Aussenform erzielt werden. Beim Blähvorgang wird mit einem im Doseninneren aufgebauten Überdruck der gegenüber dem äusseren Rand des Bodens bzw. des oberen Abdeckelementes etwas verengte zylindrische Mantelbereich aufgeweitet. Gegebenenfalls wird das Umformen an eine nach innen gerichtete Formfläche der Aussenform gemäss der EP 853 513 durchgeführt. Nebst dem Blähvorgang kann am Dosenboden von aussen her ein Pressschritt mit einem Pressstempel durchgeführt werden. Die Aussenform, der Bläh- und gegebenenfalls der Pressschritt werden so ausgeführt, dass eine gewünschte Dosenform entsteht. Dabei kann beispielsweise die Naht zwischen dem Dosenboden und dem Dosenmantel von der ursprünglichen Lage am unteren Rand des Dosenmantels in den Bodenbereich verlegt werden. Bei Aerosoldosen wird der Übergang vom Mantel zum Boden zweckmässigerweise mit einem Krümmungsradius ausgebildet, der einer bei Aerosoldosen im Übergang von der Dosenwand zum Dosenboden gängigen Formgebung entspricht. Bei einem oberen Abschlusselement in der Form eines Ventilsitzes für Aerosoldosen kann mit der Umformung eine für Aerosoldosen typische obere Abschlussform erzielt werden. Zudem kann die schlussform erzielt werden. Zudem kann die verwendete Form auch im Mantelbereich plastische Dekorelemente einprägen.

Weil die benötigten Umformkräfte relativ hoch sein können, zumindest im Übergangsbereich vom Mantel zu einem Abschlusselement, werden gegebenenfalls auch mechanische Umformvorrichtungen eingesetzt. Besonders vorteilhaft ist aber eine Umformvorrichtung mit einem elastisch verformbaren flüssigkeitsdichten Schlauchelement. Dieses Schlauchelement ist an eine Flüssigkeitsspeisung angeschlossen und mit Flüssigkeit zumindest teilweise gefüllt. Beim Umformen des Dosenkörpers in einer Aussenform wird das in den Dosenkörper eingeführte Schlauchelement mittels unter Druck zugeführter Flüssigkeit von innen gegen den Dosenkörper gedrückt. Dabei wird der Dosenkörper an die Aussenform gepresst.

Beim beschriebenen Verfahren wird eine Standard-Dose als Zwischenprodukt hergestellt, welche mit einem Formschritt bzw. einem Blähvorgang in die jeweils gewünschte Endform gebracht wird. Zur Herstellung des Zwischenproduktes kann für alle Dosen mit ungefähr dem gleichen Durchmesser und der im Wesentlichen gleichen Höhe die gleiche Anlage eingesetzt werden. Erst beim Blähschritt muss für die endgültige Dosenform die jeweils entsprechende Form eingesetzt werden. Ein Wechsel von einer Dosenform zur anderen ist mit einem äusserst kleinen Umstellaufwand verbunden.

Es versteht sich von selbst, dass zum Verbinden des Dosenmantels mit einem Boden und/oder einem oberen Abschlusselement die Stirnseiten des Mantels aufgeweitet oder verengt und die Anschlussbereiche des Bodens bzw. des Abschlusselementes entsprechend verengt oder aufgeweitet sein können. Wenn die Verengungen des Mantels bereits der gewünschten Dosenform in diesem Bereich entspricht, so kann nach dem Schweissschritt gegebenenfalls auf den Blähschritt verzichtet werden. Wenn der Dosenboden vom Doseninneren her an die Verengung angelegt und verschweisst wird, so sieht man bei einer auf einer Auflagefläche stehenden Dose lediglich die Verengung der Dosenwand gegen die Auflagefläche hin. Der eingesetzte Dosenboden ist nicht zu sehen. Die Dose kann somit im Bereich des Dosenbodens die Erscheinungsform einer Aluminium-Monoblockdose aufweisen.

Es hat sich nun gezeigt, dass der Blähschritt vorteilhaft bereits vor dem Ausbilden einer kreisförmigen Schweissnaht zwischen dem Dosenmantel und einem Abschlusselement durchgeführt werden kann. Dabei wird der Dosenmantel in die gewünschte Endform umgeformt. Die beiden Stirnseiten des Dosenmantels werden gleichzeitig in die benötigte verengte Form gebracht. Anschliessend wird ein Dosenboden und ein oberes Abschlusselement an den Dosenmantel gepresst und dabei werden die beiden kreisförmigen Schweissnähte ausgeführt. Danach hat die entstandene Dose die gewünschte Endform. Das richtige Umformen des Mantels vor dem Anbringen von Abschlusselementen reduziert die Formgebung auf einen einzigen Umformschritt, der zudem mit kleineren Kräften auch bei den Strinseiten problemlos durchführbar ist. Auf eine separate Ausformung der Endbereiche für die Schweissnähte ist nicht mehr nötig. Die Aussenform kann eine gewünschte Struktur haben, die sich an der Dose in der Form von Vorsprüngen bzw. Vertiefungen zeigt. Es hat sich gezeigt, dass für die meisten Anwendungen bereits eine Durchmesseraufweitung um 4mm genügt. Mit dieser kleinen Aufweitung können die gewünschten Dekorstrukturen und die für die Schweissnähte benötigten stirnseitigen Verengungen bereitgestellt werden.

Weil bei der Herstellung des Dosenmantels keine Material verhärtenden Behandlungen durchgeführt wurden, kann am oberen Ende des Dosenmantels auch ein aus dem Stande der Technik bekanntes Verengungs-Verfahren, wie etwa Stauch-Necking oder Spin-Flow-Necking durchgeführt werden. Diese Verengung kann bis zur Ausbildung des Ventilsitzes durchgeführt werden. Vorzugsweise wird aber lediglich eine Verengung soweit durchgeführt, dass ein Abschlussteil mit dem Ventilsitz am oberen verengten Ende dicht angeordnet werden kann. Gegebenenfalls wird die Verbindung als Falzverbindung, vorzugsweise aber als Schweiss-, insbesondere als Laserschweissverbindung, ausgebildet. Das Einsetzen eines Abschlussteiles mit Ventilsitz gewährleistet mit einem einfachen Herstellungsverfahren die Herstellung von Dosen mit einem äusserst exakten Ventilsitz.

Gegebenenfalls wird eine Bodenabdeckung so eingesetzt, dass die Verbindung des Dosenmantels mit dem Dosenboden durch diese abgedeckt ist. Vorzugsweise besteht die Bodenabdeckung aus Kunststoffflachmaterial. Es versteht sich von selbst, dass auch Flachmaterial mit zumindest einer Metall-, insbesondere Aluminium- oder Stahl-Schicht, oder auch mit einer Kartonschicht eingesetzt werden kann. Dabei ist die stabilitätsgebende Schicht gegebenenfalls mit Kunststoff beschichtet. Die eingesetzten Flachmaterialien sollen eine robuste Bodenabdeckung gewährleisten, die auf den Fördereinrichtungen der Abfüllanlagen nicht verletzt wird und auch beim Stehen auf nassen Unterlagen möglichst beständig bleibt. Die Bodenabdeckung kann mit einer Siegelschicht versehen sein, so dass sie am Boden fest gesiegelt werden kann. Anstelle einer Siegelverbindung kann zum Festsetzen der Bodenabdeckung gegebenenfalls auch eine Einrastverbindung oder eine Schweissverbindung, insbesondere mit zumindest drei Laser-Schweisspunkten, ausgebildet werden. Wenn eine magnetisierbare Bodenabdeckung verwendet wird, so kann diese auch bei Dosenkörpern aus nicht magnetisierbarem Material eine Förderung mit Magnetförderern ermöglichen.

Bei einem Dosenkörper mit Dekorfolie wird eine Folie verwendet, die auf ihrer Aussenseite bzw. Vorderseite oder aber auf der dem Dosenkörper zugewandten Seite bzw. Rückseite bedruckt ist. Bei einer transparenten Folie, die auf der Rückseite bedruckt ist, wird die Druckschicht von der Folie geschützt, so dass keine reibungsbedingten Beeinträchtigungen des Dekors entstehen können. Eine auf der Rückseite bedruckte transparente Folie kann nach dem Bedrucken über der Druckschicht mit einer Siegelschicht versehen werden, die auch durch die Druckschicht hindurch zwischen der Folie und dem Dosenmantel-Material eine feste Siegelverbindung gewährleistet.

Es ist gegebenenfalls vorteilhaft, wenn die Druckschicht auf der Folienrückseite im Wesentlichen die Funktion einer Grundierung übernimmt und das restliche Dekor auf der Vorderseite der Folie aufgedruckt wird. Wenn nun von Grundierung gesprochen wird, kann dies lediglich eine eintönige Grundfarbe oder aber auch ein Teil des Dekors, beispielsweise die flächige Farb- bzw. die Bildgestaltung, sein. Die auf der Rückseite in einer ersten Druckerei vorbedruckte Folienbahn wird in einem weiteren Druckschritt auf der Vorderseite bedruckt. Dieser weitere Druckschritt kann gegebenenfalls beim Dosenhersteller, bzw. in einer zweiten Druckerei, durchgeführt werden um spezifische Dekor-Informationen aufzubringen. Das heisst beispielsweise, dass zu einem Grunddekor im weiteren Druckschritt Beschriftungen aufgebracht werden, die für die jeweiligen Absatzmärkte unterschiedlich sind. Zum Bedrucken der Vorderseite können beliebige aus dem Stande der Technik bekannte Druckverfahren, gegebenenfalls mit nach dem Bedrucken durchgeführten Oberflächenbehandlungen, verwendet werden.

Mit den beschriebenen neuen Herstellungsschritten können auch Getränkedosen oder Getränkeflaschen aus Laser schweissbarem Flachmaterial hergestellt werden. Bei den Getränkedosen sind beispielsweise Ausführungsformen interessant bei denen der Deckel mit der Aufreissvorrichtung vor dem Befüllen eingesetzt wird. Er kann dann bei der Herstellung als Boden betrachtet werden. Der andere Dosenabschluss umfasst dann eine Befüllöffnung, die nach dem Befüllen mit einem Verschlusselement dicht verschlossen werden kann. Das Verschlusselement kann fest gecrimpt oder auch einfach eingepresst werden. Damit der Dosenabschluss mit der verschlossenen Befüllöffnung als Boden der befüllten Dose erscheint, steht dessen mittlerer Bereich etwas ins Doseninnere vor und ein äusserer Ringbereich bildet die Standfläche der Dose. Eine solche Getränkedose weist keine Falzverbindung zwischen dem Deckel und dem Mantel auf und damit ist der Materialbedarf für die Verbindung minimal.

Die Zeichnungen erläutern die erfindungsgemässe Lösung anhand eines Ausführungsbeispieles. Dabei zeigt
- Fig. 1a: eine schematische Draufsicht auf eine Trennvorrichtung, die aus Tafeln Streifen schneidet,
- Fig. 1b: eine schematische Seitenansicht einer Vorrichtung zum Anbringen von Folien auf beiden Seiten der Streifen,
- Fig. 1c: eine schematische Draufsicht auf einen Anlageteil der aus Streifen Abschnitte schneidet und diese in flachgedrückte Dosenmäntel umformt,
- Fig. 1d: zwei schematische Querschnitte von Bearbeitungsschritten zum Umformen von Abschnitten in die flachgedrückte Dosenmantel-Form,
- Fig. 2: eine schematische Seitenansicht einer Anlage, die bandförmiges Flachmaterial beidseitig mit Folien beschichtet und das Bandmaterial kontinuierlich in eine flachgedrückte Dosenmantel-Form bringt,
- Fig. 2a: eine Draufsicht auf das Flachmaterial nach dem Anbringen von Einschnitten,
- Fig. 2b: ein schematischer Querschnitt im Bereich von Umformelementen zum Umformen des Bandmaterials in die flachgedrückte Dosenmantel-Form,
- Fig. 3: ein Querschnitt der flachgedrückten Dosenmantel-Form,
- Fig. 4: eine schematische Schnittdarstellung des Schrittes zum Aufbringen eines Abdeckbandes,
- Fig. 5: ein schematischer Querschnitt einer Vorrichtung zum Laserschweissen der Dosenlängsnaht,
- Fig. 6: einen vergrösserter Ausschnitt aus Fig. 5,
- Fig. 7: eine schematische Seitenansicht eines Anlageteiles zum Laserschweissen der Längsnaht, Anpressen des Abdeckbandes, Schneiden und Konditionieren von geschlossenen Dosenmantelabschnitten,
- Fig. 8: einen Querschnitt durch eine Vorrichtung zum Anpressen des Abdeckbandes,
- Fig. 9a: eine stirnseitige Ansicht einer Vorrichtung zum Aufweiten des flachgedrückten Dosenmantels in eine zylindrische Form,
- Fig. 9b: eine Draufsicht auf eine Vorrichtung gemäss Fig. 9a,
- Fig. 9c: eine stirnseitige Ansicht einer Vorrichtung zum Aufweiten des flachgedrückten Dosenmantels in eine zylindrische Form,
- Fig. 9d: eine schematische Darstellung einer Vorrichtung zum strinseitigen Aufweiten des Dosenmantels
- Fig. 10a: einen Ausschnitt eines Schnittes durch den oberen Abschlusselement und den Dosenmantel mit aneinander anliegenden verengten bzw. aufgeweiteten Randbereichen ,
- Fig. 10b: einen Ausschnitt eines Schnittes durch den Bodenelement und den Dosenmantel mit aneinander anliegenden verengten bzw. aufgeweiteten Randbereichen,
- Fig. 10c: ein schematischer Längsschnitt durch eine Vorrichtung zum Laserschweissen von zwei Abschlussnähten,
- Fig. 11: einen Längsschnitt durch eine Vorrichtung zum Aufblähen des Dosenmantels und zum Einpressen des Dosenbodens, wobei die beiden Teildarstellungen der Situation vor und nach dem Aufblähen entsprechen,
- Fig. 12: eine schematische Darstellung der Dosenform vor und nach dem Blähvorgang,
- Fig. 12a: einen vergrösserten Ausschnitt der Verbindung zwischen Dosenmantel und oberem Abschlusselement,
- Fig. 12b: einen vergrösserten Ausschnitt der Verbindung zwischen Dosenmantel und Bodenelement,
- Fig. 13: einen Schnitt durch den Randbereich des Flachmaterials für ein Abschlusselement,
- Fig. 14: einen Ausschnitt eines Schnittes durch den Ventilsitz einer Aerosoldose mit eingesetztem Ventil,
- Fig. 15a: eine Draufsicht auf eine Getränkedose.
- Fig. 15b: einen Längsschnitt durch eine Getränkedose mit vor dem Befüllen angebrachtem Aufreissabschluss und verschliessbarer Befüllöffnung,
- Fig. 16: eine Seitenansicht einer Getränkeflasche,
- Fig. 17: einen Schnitt durch den Verbindungsbereich zwischen Boden und Mantel.
- Fig. 18a: einen Vertikalschnitt durch einen Dosenmantel mit Ausbuchtungen bei beiden Stirnseiten,
- Fig. 18b: einen Vertikalschnitt durch einen Dosenkörper mit Ausbuchtungen am Dosenmantel und daran fest geschweissten Abschlusselementen,
- Fig. 19: einen Vertikalschnitt durch eine Aerosoldose mit einem oberen Abschlusselement mit Ventil,
- Fig. 20: einen Teil eines Vertikalschnittes durch eine Aerosoldose mit einem oberen Abschlusselement mit Ventil,
- Fig. 21a: einen Längsschnitt durch einen zylindrischen Dosenmantel,
- Fig. 21b: einen Längsschnitt durch eine Vorrichtung zum Aufblähen des Dosenmantels in einer Aussenform,
- Fig. 21c: einen mittels Aufblähen geformten Dosenmantel,
- Fig. 22a: einen Längsschnitt durch eine Aussenform,
- Fig. 22b: zwei Ausschnitte aus Fig. 22a,
- Fig. 23: eine schematische Seitenansicht einer Bearbeitungsstation zum Festschweissen des Dosenbodens und des oberen Abschlusselementes am Dosenmantel,
- Fig. 24a, 24b: einen Längsschnitt durch einen Dosenkörper vor, bzw. nach dem Schweissen,
- Fig. 25,: 27a, 27b Ausschnitte aus dem Verbindungsbereich zwischen Dosenmantel und oberem Abschlusselement,
- Fig. 26a, 26b, 28a, 28b: Ausschnitte aus dem Verbindungsbereich zwischen Dosenmantel und Dosenboden,
- Fig. 29: einen Schnitt durch das Flachmaterial für den Dosenmantel beim Aufbringen einer Dichtungswulst,
- Fig. 30: eine stirnseitige Ansicht eines Rollensets zum Umformen des Flachmaterials,
- Fig. 31: eine stirnseitige Ansicht eines Rollenpaares zum Ausformen einer Vertiefung,
- Fig. 32: eine stirnseitige Ansicht eines Rollenpaares zum teilweisen Umlegen der seitlichen Randbereiche des Flachmaterials,
- Fig. 33: eine stirnseitige Ansicht eines Rollensets und einer Laser-Schweisseinrichtung zum Schweissen der Längsnaht
- Fig. 34: Querschnitte durch geschlossene Dosenmantel-Bänder für Dosen mit unterschiedlichen Querschnitten,
- Fig. 35a, 35b: Ausschnitte aus einem Querschnitt durch ein Dosenmantel-Band mit Dichtungswulst für die Längsnaht,
- Fig. 36: eine perspektivische Darstellung des Dosenmantel-Bandes beim Aufweiten und Abtrennen von Dosenmänteln,
- Fig. 37: eine stirnseitige Ansicht des Dosenmantel-Bandes beim Schliessen, Schweissen und Aufweiten,
- Fig. 38: eine perspektivische Ansicht eines Aufweitungselementes zum Aufweiten des Dosenmantel-Bandes, und
- Fig. 39: einen Längsschnitt durch eine Schneideinrichtung zum Abtrennen von Dosenmänteln.

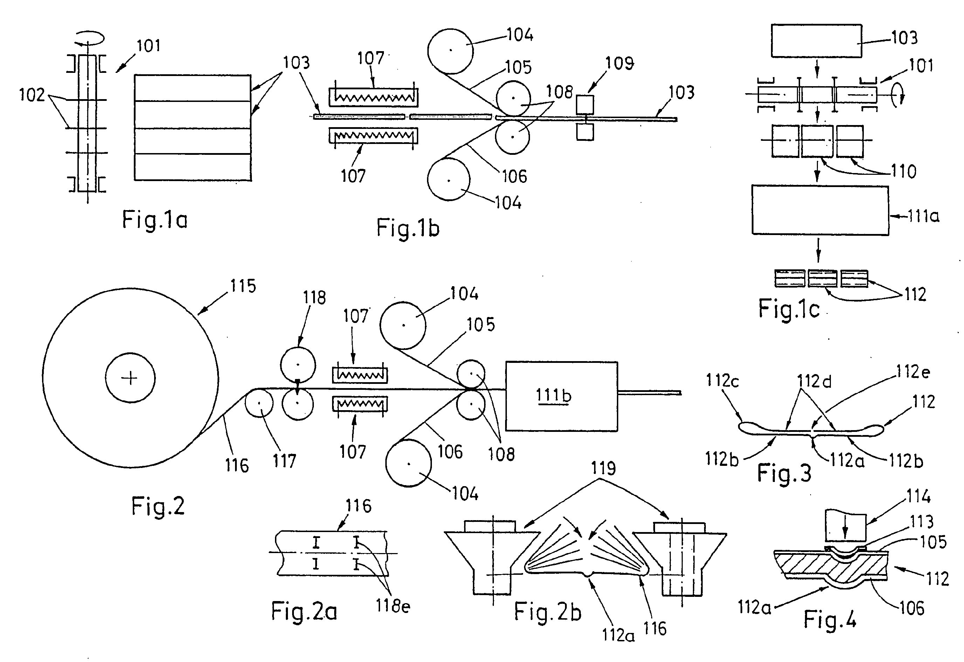

FIG. 1a zeigt eine Trennvorrichtung 101 in der Form einer beidseits gelagerten drehbaren Welle mit Trennelementen 102. Die Trennelemente 102 können in gegenseitigen Abständen, die dem gewünschten Dosenumfang zugeordnet sind, positioniert werden. Wenn nun Flachmaterialtafeln aus Metall durch die Trennvorrichtung 101 geführt werden, so entstehen Streifen 103 mit der Breite im Bereich des Dosenumfangs und der Länge von mindestens einer Dosenmantel-Höhe.

Fig. 1b zeigt einen Vorrichtungsteil zum Anbringen von Folien auf beiden Seiten der Streifen 103. Die Streifen 103 werden im Wesentlichen direkt aneinander anschliessend entlang einer Bearbeitungsachse bewegt. Über den Streifen 103 ist eine Rolle 104 mit einer Innenfolie 105 angeordnet und unter den Streifen 103 eine Rolle 104 mit der Dekorfolie 106. Die Streifen 103 werden mit einer Heizvorrichtung 107 auf eine zum Festsiegeln der Folien 105, 106 nötige Temperatur erwärmt. Zwei Anpressrollen 108 und je eine Siegelschicht auf den Folien 105 und 106 gewährleisten eine feste Verbindung der Folien 105 und 106 mit den Streifen 103. Um die beschichteten Streifen getrennt weiter behandeln zu können, ist eine Folientrenneinrichtung 109 vorgesehen, welche die Folien105 und 106 zwischen den Streifen 103 mechanisch oder gegebenenfalls mit Wärme trennt.

Fig. 1c zeigt einen Anlageteil der aus Streifen 103 mit einer Trennvorrichtung 101 Abschnitte 110 schneidet und diese in einer ersten Umformvorrichtung 111a in flachgedrückte Dosenmäntel 112 umformt.

Bei der Ausführung gemäss Fig. 3 hat der flachgedrückte Dosenmantel 112 im Bereich der Mittellinie eine Vertiefung 112a, beidseits davon zwei flache Mittelbereiche 112b, anschliessend je einen Krümmungsbereich 112c und zwei flache Randbereiche 112d, welche auf die flachen Mittelbereiche 112b gedrückt werden können. Bei den zusammen gepressten Stirnseiten 112e wird der Dosenmantel mittels einer Laserschweissung geschlossen.

Gemäss Fig. 4 wird im Bereich der Vertiefung 112a des flachgedrückten Dosenmantels 112 ein Abdeckband 113 angeordnet. Das Abdeckband 113 wird von einer Zuführvorrichtung 114, vorzugsweise direkt nach oder mit dem Zuführen der Innenfolie 105, auf die Innenfolie 105 aufgelegt.

Fig. 2 zeigt eine Ausführung bei der die flachgedrückten Dosenmäntel 112 kontinuierlich als Bandmaterial geformt und anschliessend auch geschweisst werden, so dass das Abtrennen einzelner Dosenmäntel 112 erst am Schluss erfolgt. Von einer Flachmaterialrolle 115 wird bandförmiges Flachmaterial 116 über eine Zuführeinrichtung 117 einer Einschneideinrichtung 118 zugeführt. Die Einschneideinrichtung 118 bildet am bandförmigen Flachmaterial senkrecht zur Bandachse zwei Einschnitte 118e. Bei der Umformung in die flachgedrückte Mantelform gelangen diese Einschnitte 118e in die beiden Krümmungsbereiche 112c, so dass beim Abtrennen der Dosenmantelabschnitte das Abtrennen des Flachmaterials nur noch im flachen Bereich zwischen den Krümmungsradien nötig ist. Wenn das Abtrennen auch in den Krümmungsbereichen durchgeführt werden müsste, so würden beim schneidenden Abtrennen Falten entstehen, die nicht mehr vollständig ausgeglättet werden könnten.

Im anschliessenden Vorrichtungsteil werden Folien auf beiden Seiten des Flachmaterials 116 angebracht. Das bandförmige Flachmaterial 116 wird entlang einer Bearbeitungsachse bewegt. Über dem Flachmaterial 116 ist eine Rolle 104 mit einer Innenfolie 105 angeordnet und unter den Flachmaterial 116 eine Rolle 104 mit der Dekorfolie 106. Das Flachmaterial 116 wird mit einer Heizvorrichtung 107 auf eine zum Festsiegeln der Folien 105, 106 nötige Temperatur erwärmt. Zwei Anpressrollen 108 und je eine Siegelschicht auf den Folien 105 und 106 gewährleisten eine feste Verbindung der Folien 105 und 106 mit den Flachmaterial 116.

Das beidseits beschichtete Flachmaterial 116 wird in einer zweiten Umformvorrichtung 111 b quer zur Bandachse kontinuierlich in eine flachgedrückte geschlossene Form umgeformt, welche im Querschnitt der Ausführung gemäss Fig. 3 entspricht. Die zweite Umformvorrichtung 111 b umfasst beispielsweise nacheinander Rollenpaare, welche die seitlichen Randbereiche des Flachmaterials 116 gegen die Mitte hin mehr und mehr umlegen. Fig. 2b zeigt ein Beispiel eines Rollenpaares 119. Vor dem Umlegen der seitlichen Randbereich wird in der Mitte des Flachmaterials 116 mittels eines zusammenwirkenden Formrollenpaares die Vertiefung 112a ausgebildet.

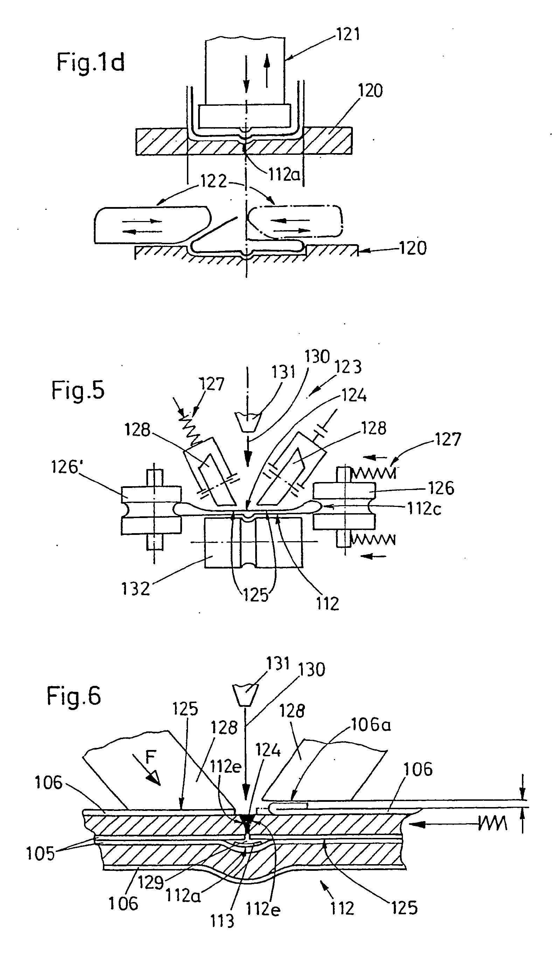

Gemäss Fig. 1d wird von der ersten Umformvorrichtung Flachmaterial in der Form von Abschnitten mittels einer Umformform 120 und einem entsprechenden ersten Umformwerkzeug 121 u-förmig umgeformt, mit der Vertiefung 112a. Mittels zwei von der Seite her wirkenden weiteren Umformwerkzeugen 122 werden die seitlichen Randbereiche vollständig umgelegt. Um den mittleren Bereich flach zu drücken, wird nochmals mit einem ersten nicht dargestellten Umformwerkzeug ohne Vertiefungsvorsprung und mit kleinerer Breite auf den Mantelabschnitt gedrückt.

Die Laserschweissung der Dosenlängsnaht erfolgt am flachgedrückten Dosenmantel-Band im Wesentlichen gleich, wie an den einzelnen Dosenmänteln. Die einzelnen Dosenmäntel werden vorzugsweise direkt aneinander anschliessen einer Schweissvorrichtung zugeführt, so dass die Schweissvorrichtung die Schweissnaht wie bei einem Dosenmantel-Band im Wesentlichen kontinuierlich ausbilden kann.

Fig. 5 und 6 zeigen eine erste Schweissvorrichtung 123 zum Laserschweissen der Dosenlängsnaht 124 bei den zusammen gepressten Stirnflächen 112e eines flachgedrückten Dosenmantels 112. Die miteinander zu verbindenden seitlichen Randbereiche 125 des Flachmaterials liegen beidseits der Vertiefung 112a je auf einem als Führungsteilfläche 112b wirkenden flachen Mittelbereich der Innenberandung des Dosenmantels auf. In der dargestellten Ausführungsform sind die beiden Führungsteilflächen 112b an der Innenseite des Dosenmantels ausgebildet.

Der Dosenmantel 112 weist eine geschlossene flachgedrückte Form auf, wobei die aneinander anliegenden ebenen Teilflächen beim Schweissen über Krümmungsbereiche 112c miteinander verbunden sin. Ein Randbereich 125 wird von einer der beiden seitlichen Anpressrollen 126 mittels einer Anpresseinrichtung 127 gegen den anderen Randbereich 125 gepresst, wodurch das Zusammenpressen der Stirnflächen 112a gewährleistet ist. Damit die beiden an einen gemeinsamen Anschlag gepressten Randbereiche 125 an Führungsteilflächen 112b gehalten werden können, sind Halterollen 128 so angeordnet, dass sie die beiden Randbereiche 125 bei den Stirnflächen 112e an den Führungsflächen 112b halten. Eine der beiden Halterollen 128 wird von einer Anpresseinrichtung 127 gegen den einen Randbereich 125 gepresst. Der flachgedrückte Dosenmantel 112 wird im Bereich der Halterollen 128 von einer Tragrolle 132 getragen. Die andere Halterolle 128 wird von einer Einstelleinrichtung in einem einstellbaren Abstand zum anderen Randbereich 125 gehalten. Die Schweissung wird mit einem Laserstrahl 130 aus einer Laserquelle 131 erzielt.

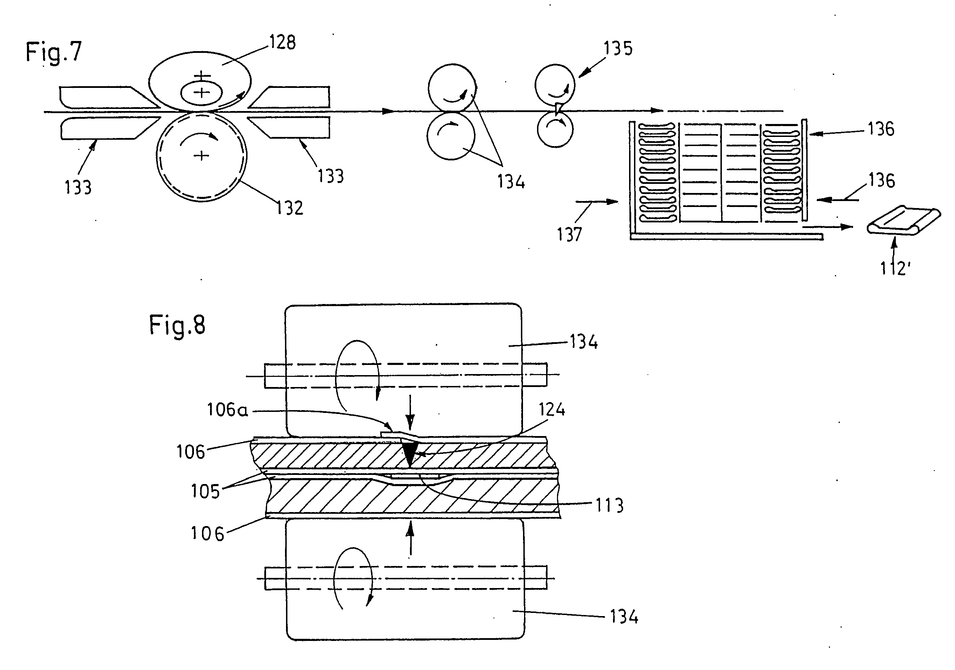

Um eine Beeinträchtigung der Dekorfolie 106 beim Schweissen der Längsnaht 124 zu verhindert, kann die Dekorfolie 106 so auf dem Flachmaterial 116, 103 angeordnet werden, dass sie beim einen Randbereich 125 nicht bis zur Stirnfläche 112e reicht und beim anderen Randbereich 125 aber über die Stirnfläche 112e vorsteht. Der vorstehende Folienbereich 106a wird in einem Randbereich des Flachmaterials 116, 103 nicht an diesem fest gesiegelt, so dass dieser freie Folienrand 106a vor dem Ausbilden der Längsnaht 124 aus dem Bereich der Längsnaht 124 weg umgelegt werden kann. Nach dem Schweissvorgang kann der freie Folienrand 106a gemäss Fig. 8 über die Längsnaht 124 gelegt und fest gesiegelt werden. Dadurch wird die Längsnaht 124 aussen vollständig abgedeckt. Weil die Laser-Schweissnaht äusserst schmal ist, wird gegebenenfalls auf eine Überdeckung durch die Dekorschicht verzichtet. Um trotzdem eine Korrosion bei der Naht auszuschliessen, kann etwas Abdeckmaterial aufgebracht werden.

Eine im Bereich der Schweissnaht 124 beschädigte Innenfolie 105 wird mit Hilfe des Abdeckbandes 113 abgedeckt, so dass ein vollständiger Korrosionsschutz gewährleistet ist. Beim Schweissvorgang gewährleistet ein kleiner Freiraum 129 zwischen den Stirnseiten 112e und dem Abdeckband 113, dass dieses beim Schweissen nicht beinträchtigt wird. Nach dem Schweissvorgang kann die Vertiefung 112a mit dem Abdeckband 113 gegen die Schweissnaht 124 gedrückt und dort so fest gesetzt werden, dass es beidseits an der intakten Innenfolie 105 fest gesiegelt ist. Weil das Abdeckband auf der Seite die der Innenfolie 105 in der Vertiefung 112a zugewandt ist keine Siegelschicht umfasst, kann sie an die Innenfolie 105 bei der Längsnaht 124 übertragen werden.

Fig. 7 zeigt nebst der Halterolle 128 und der Tragrolle 132 Führungseinrichtungen 133. Das in Fig. 8 dargestellte Festsiegeln des vorstehenden Folienbereiches 106a und des Abdeckbandes 113 wird mit zwei Pressrollen 134 erzielt. Die zum Siegeln nötige Wärme stammt gegebenenfalls von der Längsnaht 124, oder wird von aussen zugeführt. Bei einer Anlage mit einem Dosenmantel-Band werden die Dosenmantel-Abschnitte in einer Abtrennvorrichtung 135, vorzugsweise mit umlaufenden Schneidkanten abgetrennt. Die geschlossenen flachgedrückten Dosenmäntel 112' gelangen beispielsweise oben in eine Konditioniervorrichtung 136, wo sie während einer vorgegebenen Verweilzeit mittels zugeführter Warmluft 137 so lange warm gehalten werden, wie dies für eine dauerhafte Verbindung zwischen dem metallischen Flachmaterial und der Dekorfolie 106 bzw. der Innenfolie 105 nötig ist. Die unten ausgetragenen geschlossenen flachgedrückten Dosenmäntel 112' direkt, können nach einer Lagerung oder nach einem Transport zur Herstellung von Dosenkörpern verwendet werden.

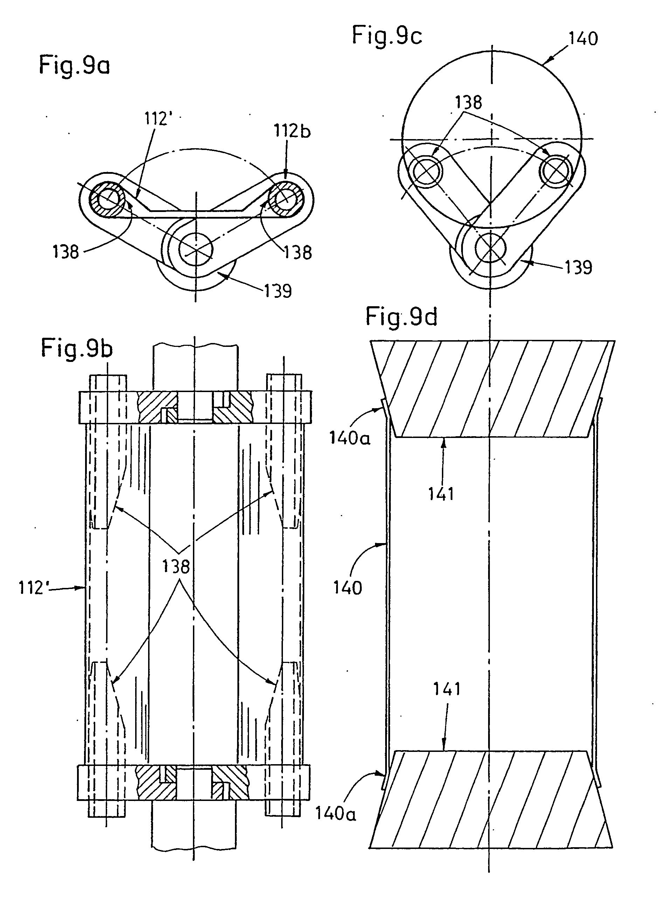

Fig. 9a und 9b zeigen einen geschlossenen flachgedrückten Dosenmantel 112' der vor dem Anbringen eines Bodens oder eines oberen Abschlusselementes in radialer Richtung in eine kreiszylindrische Form gebracht wird. Das Umformen von der flachen zur kreiszylindrischen Form wird gegebenenfalls mechanisch, vorzugsweise aber mit Pressluft durchgeführt. Dazu werden beispielsweise von beiden Stirnseiten her Druckluftlanzen 138 in die Krümmungsbereiche 112b des geschlossenen flachgedrückten Dosenmantels 112' eingeführt. Mittels eines Druckluftstosses kann der flachgedrückte geschlossene Dosenmantel 112' zu einem kreiszylindrischen Dosenmantel 140 gemäss Fig. 9c umgeformt werden. Bei der Formänderung wird auch die Relativlage der Druckluftlanzen 138 geändert. Dazu sind die Druckluftlanzen 138 beispielsweise an Schwenkführungen 139 angeordnet.

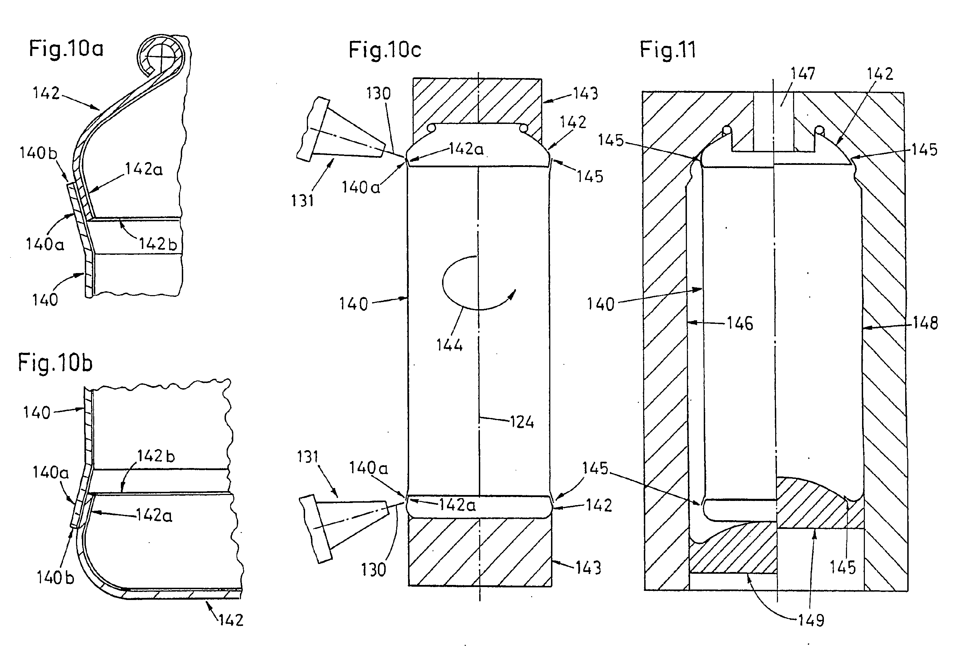

Fig. 9d zeigt, wie der kreiszylindrische Dosenmantel 140 an beiden Stirnseiten wenig aufgeweitet wird. Die stirnseitigen Aufweitungen werden mit Aufweitungswerkzeugen 141 erzeugt. Jede stirnseitige Aufweitung kann als Randbereich 140a für eine Verbindung mit einem in den Fig. 10a, 10b und 10c dargestellten Abschlusselement 142 eingesetzt werden, wenn das Abschlusselement 142 entsprechend ausgebildete Randbereiche 142a aufweist. Die Naht-Kontaktflächen des Dosenmantels 140 und des Abschlusselementes 142 liegen in den von der Zylinderform abweichenden, sich in Richtung der Dosenachse aufweitenden bzw. verengenden, ringförmig geschlossene Randbereichen 140a und 142a. Beim Zusammendrücken der zu verbindenden Teile 140 und 142 wird, wie in Fig. 10a und 10b dargestellt, ein verengter auf einen entsprechend aufgeweiteten geschlossene Randbereich 142a bzw. 140a gedrückt, wobei von den Stirnflächen 142b, 140b der beiden Randbereiche 142, 140 eine innen und eine aussen am Dosenkörper liegt. In der dargestellten Ausführungsform liegt die Stirnfläche 140b des Dosenmantels 140 aussen. Die beiden Randbereiche 142a, 140a werden bis zum Erreichen des gegenseitigen Anschlages zusammen gestossen. Dabei bildet der geschlossene Randbereich 140a des Dosenmantels 140 die Führungsfläche, die sich entlang der gesamten auszubildenden Abschlussnaht erstreckt. Durch die entsprechend konische Ausgestaltung der zusammengepressten Randbereiche 142a und 140a wird gewährleistet, dass die beiden Naht-Kontaktflächen luftfrei aneinander anliegen und somit auch bei äusserst dünnem Flachmaterial eine dichte Lasernaht erzeugt werden kann.

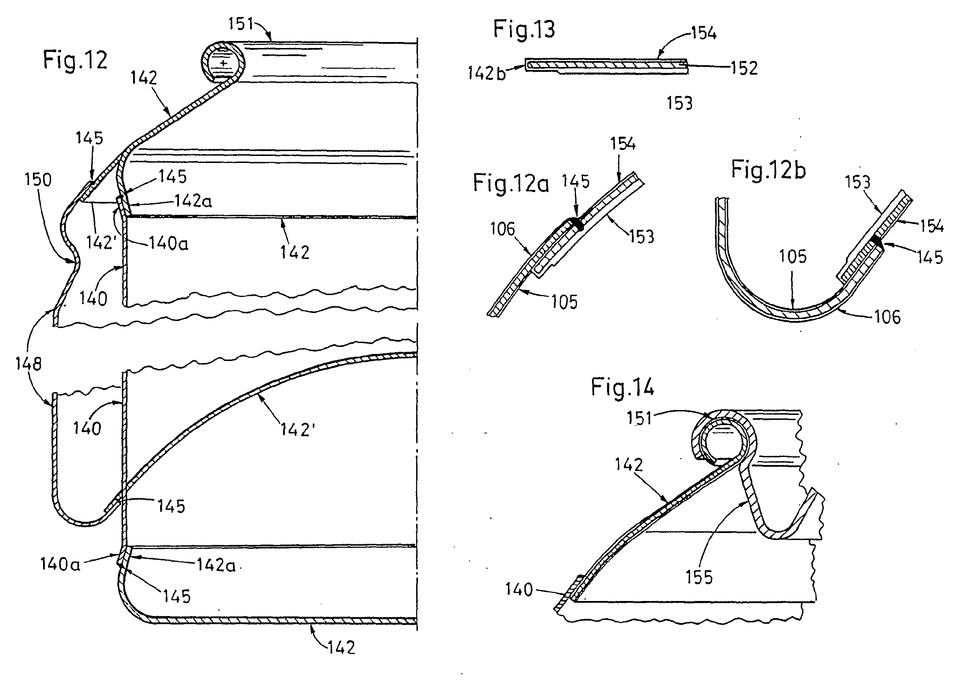

Gemäss Fig. 10c werden mit einer Schweisshalterung 143 zwei Abschlusselemente 142 an die Stirnseiten des Dosenmantels 140 gedrückt. Während des Drehens 144 der Schweisshalterung 143 wird mit je einem Laserstrahl 130 aus je einer Laserquelle 131 an beiden Stirnseiten des Dosenmantels 140 eine ringförmig geschlossene Abschlussnaht 145 (vgl. Fig. 12) gebildet. Gemäss dem dargestellten Ausführungsbeispiel wird am zylindrischen Dosenmantel 140 unten ein Abschlusselement 142 in der Form eines Dosenbodens und oben in ein Abschlusselement 142 in der Form eines Halsteiles mit Ventilsitz eingesetzt. Es versteht sich von selbst, dass auch lediglich ein Abschlusselement 142 oder anders geformte Abschlusselemente 142 eingesetzt werden können.

Der gemäss Fig. 10c entstehende Dosenkörper entspricht im Wesentlichen einer Aerosoldose, wobei die beiden Abschlussnähte 145 im Wandbereich sichtbar sind. Bei Dosen mit einem hohen Anspruch an das Erscheinungsbild sollte die untere Abschlussnaht 145 weniger klar erkennbar sein. Die obere Abschlussnaht müsste in einem Bereich sein, der vom Ventilabschlussteil oder vom Deckel abgedeckt wird. Weil eine Lasernaht verformbar ist, kann der Dosenkörper in eine gewünschte Form umgeformt werden.

Fig. 11 zeigt eine einfache Umformlösung mit vielen Gestaltungsmöglichkeiten. Die gewünschte Endform wird mit einem Blähvorgang in einer Aussenform 146 erzielt. Dabei gelangt ein Druckfluid, vorzugsweise Druckluft, gegebenenfalls aber eine Flüssigkeit, durch eine Zuführöffnung 147 ins Doseninnere. Das Flachmaterial des Dosenmantels 140 und der Abschlusselemente 142 wird aufgrund des Innendruckes gedehnt und umgeformt bis ein vollständig an der Aussenform 146 anliegender Dosenkörper 148 ausgebildet ist. Das gängigerweise verwendete Stahlblech mit der daran angebrachten Dekor- und Innenfolie bzw. der Kunststoffbeschichtung ist gut dehnbar und kann aufgrund der kleinen Dicke mit relativ kleinen Kräften umgeformt werden. Beim Umformen bleibt die Beschichtung unbeeinträchtigt.

Gegebenenfalls wird nebst dem Blähvorgang am Dosenboden von aussen her ein Pressschritt mit einem Pressstempel 149 durchgeführt. Die Aussenform 146, der Bläh- und gegebenenfalls der Pressschritt werden so ausgeführt, dass die gewünschte Dosenform entsteht. In der dargestellten Ausführung wird die Naht zwischen dem Dosenboden und dem Dosenmantel 140 von der ursprünglichen Lage am unteren Rand des Dosenmantels 140 in den Bodenbereich verlegt. Der Übergang vom Mantel zum Boden wird mit einem Krümmungsradius ausgebildet, der einer bei Aerosoldosen im Übergang von der Dosenwand zum Dosenboden gängigen Formgebung entspricht. Es versteht sich von selbst, dass anstelle der dargestellten Bodenwölbung auch eine flache oder nach aussen gewölbte Form gewählt werden kann. Beim oberen Dosenende wird eine für Aerosoldosen typische obere Abschlussform erzielt. Zudem könnte die verwendete Form auch im Mantelbereich plastische Dekorelemente umfassen. Diese Formgebung ermöglicht mit kleinem Aufwand äusserst vielfältige Formen. Da der Wechsel von einer Form zur andern lediglich das Auswechseln der Aussenform 146 bedeutet, wird mit dem neuen Herstellungsverfahren für Dosenkörper mit kleinem Aufwand eine äusserst grosse Flexibilität erzielt.

Fig. 12 zeigt die Dosenform vor und nach dem Blähvorgang. Die für ein optimales Schweissen eingesetzte konische Ausformung der Randbereiche 140a und 142a sowie die Abschlussnähte 145 sind nach dem Blähvorgang in Bereichen des Dosenkörpers 148, wo sie keine optische Beeinträchtigung mehr bilden. Die Umfangsvertiefung 150 kann zum Festhalten eines oberen Abschlussteiles, beispielsweise eines Deckels, verwendet werden. Der Ventilsitz 151 wurde am Abschlussteil ausgebildet und anschliessend nicht mehr verformt, so dass er eine hohe Genauigkeit aufweist.

Gemäss Fig. 13 umfasst das Ausgangsmaterial für ein Abschlusselement 142 eine metallische Schicht 152, eine Innenbeschichtung 153 und eine Aussenbeschichtung 154. Die Innenbeschichtung 153 erstreckt sich über die Stirnfläche 142b. Dazu wird gegebenenfalls nach dem Ausstanzen einer Scheibe aus beschichtetem Blech mit einem Wärme zuführenden Pressvorgang ein Randbereich der dicken Innenbeschichtung um die Stirnseite umgepresst. Anschliessend wird mit einem Tiefziehvorgang aus der rundum beschichteten Scheibe das Abschlusselement 142 hergestellt.

Die Figuren 12a und 12b zeigen, dass bei der oberen und unteren Abschlussnaht 145 nach dem Schweissvorgang eine durchgehende Innenbeschichtung gewährleistet werden kann. Die Innenbeschichtung 153 wird so dick gewählt, dass auch nach dem Scheissvorgang noch eine dichte Schicht bestehen bleibt. Durch das Umpressen der Innenbeschichtung 153 auf die Stirnfläche 142b schliesst diese direkt an die Innenfolie 105 des Dosenmantels 140 an. Lediglich die Aussenbeschichtung ist bei der Abschlussnaht 145 unterbrochen, was aber nicht stört, weil dieser Bereich bei hohen ästhetischen Ansprüchen von einem oberen Abdeckelement überdeckt werden kann.

Fig. 14 zeigt einen weiteren Vorteil der dicken Innenbeschichtung 153 des oberen Abschlusselementes 142 auf. Ein Verbindungsbereich 155 des Ventils kann nämlich ohne einzulegende Dichtung direkt am Ventilsitz 151 fest gesetzt werden, weil die Innenbeschichtung 153 als Dichtung wirkt.

Die anhand der Fig. 9a bis 11 beschriebenen Bearbeitungsschritte werden etwa an Drehstationen mit Drehtellern durchgeführt, wobei die Dosenmäntel, bzw. die Dosenkörper über einen Übergabeteller auf den Drehteller gelangen beim Weiterdrehen bearbeitet werden und über einen weiteren Übergabeteller vom Drehteller weg zu einer Weiterführung gebracht werden. Die Abschlusselemente werden über Zuführeinrichtungen zu den Dosenmänteln zugeführt und daran fest gepresst. Die beschriebenen Bearbeitungsmittel sind entsprechenden Drehbereichen der Drehteller zugeordnet. Ein Schweissstrahl wird über einen Lichtleiter den Bearbeitungsstellen des Drehtellers zugeführt. Die Halterungen am Drehteller für das Schweissen der Abschlussnähte sind vorzugsweise mit Drehantrieben verbunden, um beim Drehen der Dosenmäntel geschlossene Schweissnähte erzielen zu können.

Es versteht sich von selbst, dass das obere Abschlusselement anstelle des Ventilsitzes auch eine andere Öffnungsart, beispielsweise einen Hals mit Gewinde oder auch einen aufreissbaren Verschluss umfassen kann. Weil auf einen Falzbereich zum Ausbilden einer Bördel- bzw. Falzverbindung immer verzichtet werden kann, ist der Materialanteil des oberen Abschlusselementes im Vergleich zu den bekannten Lösungen relevant kleiner.

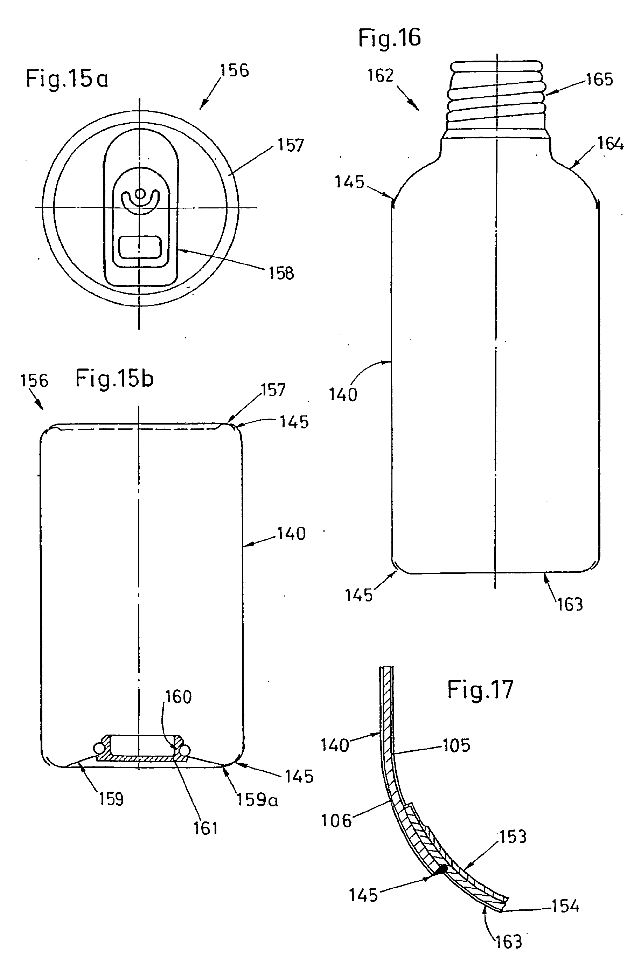

Das beschriebene Verfahren und die beschriebenen Anlage ermöglicht die effiziente Herstellung von verschiedenen Dosenkörpern und auch Tuben. Fig. 15a und 15b sowie 16 zeigen weitere Ausführungsformen, die mit dem neuen Verfahren effizient hergestellt werden können.

Fig. 15a und 15b zeigen eine Getränkedose 156 bei welcher ein Deckel 157 mit der Aufreissvorrichtung 158 vor dem Befüllen mit einer Laser geschweissten Abschlussnaht 145 am Dosenmantel 140 eingesetzt wird. Er kann dann bei der Herstellung als Boden betrachtet werden. Ein Befüll-Dosenabschluss 159 wird ebenfalls am Dosenmantel 140 fest geschweisst und umfasst eine Befüllöffnung 160, die nach dem Befüllen mit einem Verschlusselement 161 dicht verschlossen wird. Das Verschlusselement 161 kann fest gecrimpt oder auch einfach eingepresst werden. Damit der Befüll-Dosenabschluss 159 mit der verschlossenen Befüllöffnung 160 als Boden der befüllten Getränkedose 156 erscheint, steht dessen mittlerer Bereich etwas ins Doseninnere vor und ein äusserer ringförmiger Auflagebereich 159a bildet die Standfläche der Dose. Gegebenenfalls erstreckt sich der Befüll-Dosenabschluss 159 aussen im Wesentlichen über die gesamte Bodenfläche und bildet dabei eine Bodenabdeckung, die insbesondere am Befüll-Dosenabschluss 159 fest gesiegelt wird. Die beschriebene Getränkedose 156 weist keine Falzverbindung zwischen dem Deckel und dem Mantel auf und damit ist der Materialbedarf für die Verbindung minimal.

Fig. 16 zeigt eine Getränkeflasche 162 aus Flachmaterial mit einer Metallschicht. Am Dosenmantel 140 ist unten ein Abschlusselement in der Form eines im Wesentlichen flachen Bodens 163 fest geschweisst. Oben am Dosenmantel 140 ist über eine Abschlussnaht 145 ein Halsteil 164 mit einer Gewindeöffnung 165 angeordnet.

Fig. 17 zeigt anhand eines vergrösserten Ausschnittes den Übergang vom Dosenmantel 140 zum Dosenboden 163, wobei auf der Innenseite eine durchgehende Innenbeschichtung 153, 105 und aussen eine Dekorfolie 106 und eine Aussenbeschichtung 154 angeordnet sind. Dadurch ist innen und aussen ein guter Korrosionsschutz gewährleistet. Gegebenenfalls wird die Abschlussnaht 145 aussen noch mit Kunststoff beschichtet, so dass keine Korrosion auftreten kann. Gegebenenfalls wird die Abschlussnaht 145 durch eine Bodenabdeckung abgedeckt, welche vorzugsweise aussen am Dosenboden 163 fest gesiegelt ist.

Die beschriebenen Getränkedosen 156 und die Getränkeflaschen 162 können beim Blähvorgang vielfältige Gestaltungsformen im Bereich des Dosenmantels und auch im Übergang zum Dosenboden erhalten. Mit einem erfinderischen Herstellungsverfahren können metallische Dosen im Wesentlichen mit den bei PET-Flaschen gängigen Formmöglichkeiten hergestellt werden. Weil die Kunststoffbeschichtung äusserst dünn ausgebildet werden kann und bei Eisenblech die Korrosion langfristig einen Zerfall eines weggeworfenen Dosenkörpers ermöglicht, sind die Abfallprobleme im Vergleich zu PET-Flaschen deutlich kleiner.

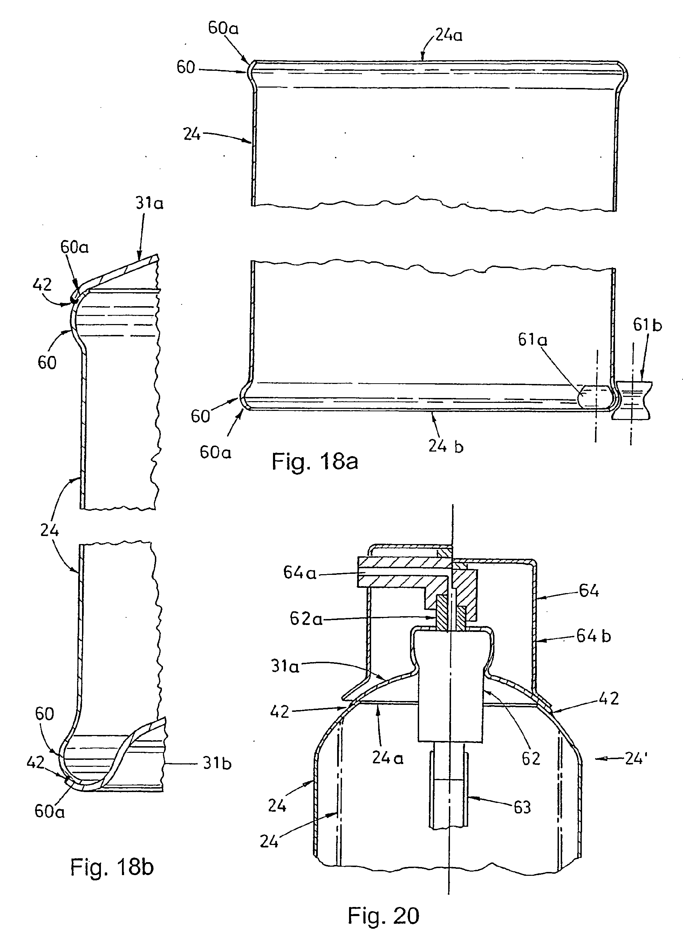

Fig. 18a zeigt einen Dosenmantel 24 mit ringförmigen Ausbuchtungen 60, die bei beiden Stirnseiten 24a und 24b radial nach aussen ausgebildet sind. Bei den Ausbuchtungen entsteht gegen die jeweilige Stirnseite 24a, 24b hin eine Querschnittsverengung.

Zum Ausbilden der Ausbuchtungen 60 werden beispielsweise zwei zusammenpassende Formrollen 61 a und 61 b innen und aussen am Dosenmantel 24 angeordnet. Während der Dosenmantel 24 an den Formrollen 61 a und 61 b vorbei gedreht wird, kann die innere Formrolle 61 a radial nach aussen gegen die äussere Formrolle 61 b gepresst werden bis die gewünschte Ausbuchtung 60 gebildet ist. Mit einer Ausbuchtung 60 wird ohne Verengungsschritt an mindestens einer Stirnseite 24a, 24b des Dosenmantels 24 eine Schulter 60a bereitgestellt. Aufweitungen sind im Vergleich zu Verengungen wesentlich problemloser mit guter Qualität herzustellen. Mit kleinem Aufwand wird eine Schulter 60a mit glatter Oberfläche erzielt.

Gemäss Fig. 18b werden bei den Ausbuchtungen 60 an die Schultern 60a Abschlusselemente, beispielsweise ein Dosenboden 31b oder ein oberes Abschlusselement 31a, gepresst. Mit einer Verbindungsnaht 42 in der Form einer Laserschweissnaht wird eine feste und dichte Verbindung gebildet. Vorzugsweise wird zuerst der Dosenboden 31b fest geschweisst. Vor oder gegebenenfalls nach dem Festschweissen des oberen Abschlusselementes 31 a kann der Dosenmantel 24 noch umgeformt werden, beispielsweise in dem der Dosenquerschnitt zumindest auf den Durchmesser der mindestens einen Ausbuchtung 60 aufgeweitet wird. Vor dem Festschweissen des oberen Abschlusselementes 31 a können zum Aufweiten des Dosenmantels 24 Formwerkzeuge, wie beispielsweise Rollen, in das Doseninnere eingeführt werden. Gegebenenfalls wird zur Aufweitung des Dosenquerschnittes auch ein Fluid unter Druck in das Doseninnere eingebracht und der Dosenmantel 24 in eine Innenform gedrückt.

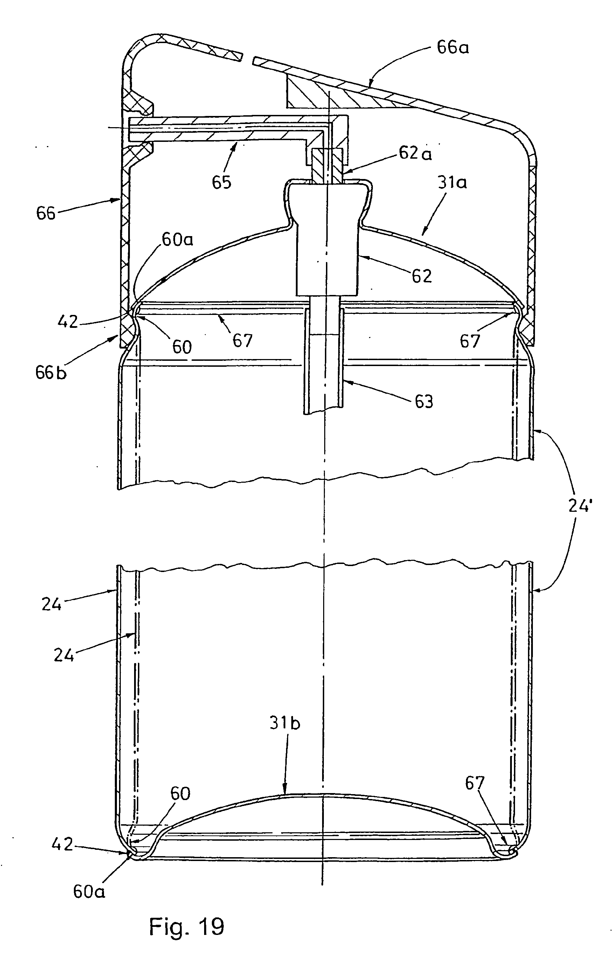

Fig. 19 zeigt eine Aerosoldose 24', die unter Verwendung eines zylindrischen Dosenmantels 24 mit Ausbuchtungen 60 hergestellt wurde. An einer unteren Schulter 60a wurde ein Dosenboden 31 b angeordnet. Der äussere Randbereich des Dosenbodens 31 b ist an die Schulter 60a angepasst, so dass der äussere Rand des Dosenbodens 31 b beim Zusammenpressen dicht an der Schulter 60a anliegt und somit eine präzise und dichte Laserschweissnaht als Verbindungsnaht 42 ausgebildet werden kann. Der Dosenmantel 24 wird vor dem Aufsetzen des oberen Abschlusselementes 31 a von einer ersten zylindrischen Form in eine zweite Form aufgeweitet. Dabei können beispielsweise gewünschte Oberflächenstrukturen erzielt werden. Zum Aufweiten des Dosenmantels 24 werden gegebenenfalls Formwerkzeuge, wie beispielsweise Rollen, in das Doseninnere eingeführt. Vorzugsweise aber wird zur Aufweitung des Dosenquerschnittes ein Fluid unter Druck in das Doseninnere eingebracht und der Dosenmantel in eine Innenform gedrückt, was beispielsweise aus den Patenten EP 853 513 B1, EP 853 514 B1 und EP 853 515 B1 bekannt ist. Die Ausbuchtung 60 an der oberen Stirnseite 24a wird vorzugsweise in der ursprünglichen Form belassen, so dass an die Schulter 60a ein kuppelförmiges oberes Abschlusselement 31a gepresst und mit einer Verbindungsnaht 42 fest geschweisst werden kann.

Das obere Abschlusselement 31 a umfasst ein Ventil 62 von dem ein Schlauch 63 gegen den Dosenboden 31 b führt und das über ein Austragsröhrchen 62a betätigt werden kann. Ein auf das Austragsröhrchen 62a gesteckter Austragsteil 65 ist in einer Kappe 66 gehalten. Um das Ventil 62 zu betätigen wird ein Betätigungsbereich 66a der Kappe 66 auf den Austragsteil 65 gedrückt. Dabei wird das Austragsröhrchen 62a nach unten gedrückt und damit das Ventil 62 geöffnet. Die Kappe 66 ist mit einem Einrastbereich 66b in einer entsprechenden Einrastform des Dosenmantels 24 gehalten. Die Einrastform des Dosenmantels 24 wird gegebenenfalls von der Ausbuchtung 60 oder einem verengten Bereich zwischen der Ausbuchtung 60 und dem ausgeweiteten Bereich des Dosenmantels 24 gebildet. Gegebenenfalls kann die Einrastform auch vom äusseren Rand des oberen Abschlusselementes 31 a bzw. von der Verbindungsnaht 42 gebildet werden.

Die Kappe 66 überdeckt das obere Abschlusselement 31a und gewährleistet zusammen mit dem Dosenmantel 24, welcher vorzugsweise eine Dekorfolie umfasst, ein attraktives Erscheinungsbild, das dem einer einteiligen Aludose entspricht. Es sind auch Ausführungsformen möglich bei denen Dosenmantel 24 und Dosenboden einteilig ausgebildet sind, oder bei denen die Verbindungsnaht 42 zwischen Dosenmantel 24 und Dosenboden 31 b von einer Bodenabdeckung überdeckt sind. Selbst wenn die Verbindungsnaht 42 beim Dosenboden sichtbar ist, ist sie als dünne Laserschweissnaht kaum erkennbar. Um eine Oxydation der Verbindungsnaht 42 zu verhindern, wird sie gegebenenfalls mit einer Beschichtung abgedichtet.

Um auch im Doseninnern eine durchgehende Innenbeschichtung zu gewährleisten, werden der Dosenmantel 24, der Dosenboden 31 b und das obere Abschlusselement auf der Innenseite mit einer Schutzschicht, in der Form einer Folie oder einer Beschichtung, versehen. Bei den Verbindungsnähten 42 wird gegebenenfalls Dichtungsmaterial 67 ringförmig angeordnet, welches auch nach dem Ausbilden der Verbindungsnähte 42 eine durchgängige Dichtungsschicht gewährleistet. Damit die Laserschweissung nicht durch Beschichtungen gestört wird, können die aneinander anliegenden Teile im Bereich der Lasernaht vor der Laserschweissung mit einem Laser zur Entfernung der Beschichtung behandelt werden. Die Innenbeschichtung wird dadurch nicht beeinträchtigt.

Fig. 20 zeigt den oberen Teil einer Aerosoldose 24', bei welcher der Dosenmantel 24 an einer verengten Stirnseite 24a mit einem kuppelförmigen oberen Abschlusselement 31 a über die Verbindungsnaht 42 verbunden ist. Der Dosenmantel 24 wird gegebenenfalls vor dem Aufsetzen des oberen Abschlusselementes 31a von einer ersten zylindrischen Form in eine zweite Form aufgeweitet. Dabei können beispielsweise gewünschte Oberflächenstrukturen erzielt werden. Das Abschlusselement 31a umfasst ein Ventil 62 von dem ein Schlauch 63 zum Dosenboden führt und das über ein Austragsröhrchen 62a betätigt werden kann. Der auf das Austragsröhrchen 62a gesteckte Sprühkopf 64 umfasst einen Austragskanal 64a und eine Hülle 64b. Die Hülle 64b erstreckt sich radial nach aussen und axial gegen das obere Abschlusselement 31 a vorzugsweise soweit, dass die Verbindungsnaht 42 im Wesentlichen überdeckt wird und somit das obere Abschlusselement 31 a nicht sichtbar ist. Die Aerosoldose 24' tritt nur mit dem Dosenmantel, der eine Dekorschicht umfasst, und mit dem Sprühkopf 64 in Erscheinung.

Unabhängig von der genauen Ausbildung der verschweissten Teile, ist das Festschweissen eines oberen Abschlusselementes 31 a mit dem Ventil 62 sehr vorteilhaft. Durch das Festschweissen des oberen Abschlusselementes 31 a werden Mikroleckagen ausgeschlossen. Die Befüllung der Aerosoldose 24' erfolgt vor dem Aufsetzen des Sprühkopfes 64 durch Austragsröhrchen 62a.

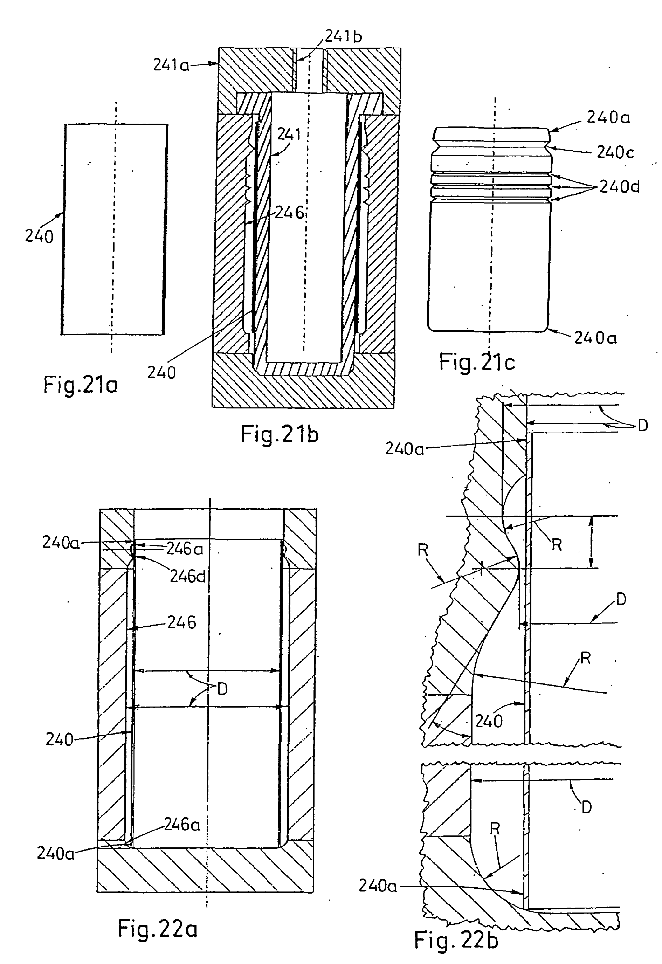

Fig. 21 a zeigt einen zylindrischen Dosenmantel 240, der gemäss Fig. 21b in eine Aussenform 246 eingesetzt und mit einem Blähvorgang von innen an diese Aussenform 246 angepresst wird. Der Blähvorgang wird vorzugsweise vor dem Festsetzen eines Abschlusselementes und somit vor dem Schweissen einer Abschlussnaht durchgeführt, weil dann auch bei den Stirnseiten eine ungehinderte Verformung möglich ist. Nach dem Einsetzen eines Abschlusselementes kann diese Verformung auch durchgeführt werden, sie ist aber zumindest in der Nähe des Abschlusselementes erschwert. Beim Blähvorgang wird zumindest ein, vorzugsweise aber werden beide, Randbereiche 240a bei den Stirnseiten ausgeformt. Um lediglich einen Umformschritt zu benötigen, sind die Randbereiche 240a nach dem Blähvorgang gegen die Stirnseite hin verengt, wobei die Krümmung im Wesentlichen gemäss der gewünschten Krümmung im Übergang vom Dosenmantel zum Abschlusselement gewählt ist. Gegebenenfalls werden beim Blähvorgang auch ein Eingriffsbereich 240c für einen Dosendeckel und insbesondere Dekorstrukturen 240d ausgeformt.

Am Dosenmantel 240 werden somit vor dem Schweissen der Abschlussnaht 245 an die Abschlusselemente 242 angepasste Naht-Kontaktflächen ausgebildet. Für das Schweissen einer Abschlussnaht 245 wird der Dosenmantel 240 und mindestens ein Abschlusselement 242 bis zum Erreichen eines gegenseitigen Anschlages mit den Randbereichen 240a, 242a zusammen gestossen, wobei von den Stirnflächen der beiden Randbereiche 240, 142 eine innen und eine aussen am Dosenkörper 248 liegt. Die Abschlussnaht 245 wird beim gegenseitigen Anschlag zwischen luftfrei aneinander anliegenden Naht-Kontaktflächen ausgebildet.

Fig. 22a und 22b zeigen eine Aussenform 246 mit Formrandbereichen 246a und einem Eingriffsformbereich 246d. Die Krümmungsradien R und die Durchmesser D werden entsprechend der gewünschten Formgebung gewählt. Ausgehend von einem zylindrischen Dosenmantel 240 können durch die Wahl einer entsprechenden Aussenform 246 verschiedenartigste Dosenformen bereitgestellt werden. Es hat sich gezeigt, dass bereits mit einer Durchmesser-Erhöhung von maximal 6mm, vorzugsweise aber maximal 4mm, die meisten gewünschten Dosenformen erzielt werden können.

Der Dosenmantel 240 kann nach dem Einsetzen in die Aussenform 246 mittels eines Überdruckes im Doseninnern an die Aussenform 246 gebracht werden. Das Aufweiten an die Aussenform 246 wäre auch mit mechanischen Elementen wie Rollen oder Spreizelementen möglich. Bevorzugt wird aber eine Lösung gemäss Fig. 21b gewählt, bei der ein mittels Druckflüssigkeit ausdehnbares Schlauchelement 241 im Innern des Dosenmantels 240 angeordnet, durch das Zuführen von Druckflüssigkeit mit der Dosenwand 240 gegen die Aussenform 246 gepresst und nach dem Abführen von Druckflüssigkeit wieder vom Dosenmantel 240 getrennt wird. Das Schlauchelement 241 ist an einem Anschlussteil 241 a mit einer Fluidzuführung 241 b befestigt. Die Fluidzuführung 241 b ist mit einer nicht dargestellten Druckquelle verbunden.

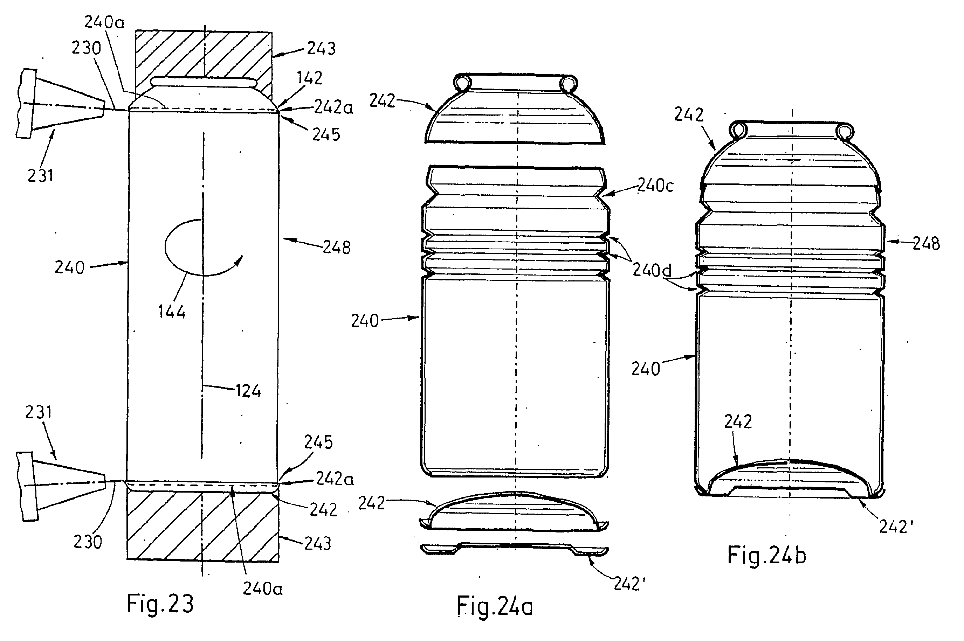

Fig. 23 zeigt das Festschweissen von zwei Abschlusselementen 242 an einem Dosenmantel 240, dessen Randbereiche in der Aussenform 246 geformt wurden. Mit einer Schweisshalterung 243 werden die beiden Abschlusselemente 242 an die Stirnseiten des Dosenmantels 240 gedrückt. Während des Drehens 144 der Schweisshalterung 243 wird mit je einem Laserstrahl 230 aus je einer Laserquelle 231 an beiden Stirnseiten des Dosenmantels 240 eine ringförmig geschlossene Abschlussnaht 245 gebildet. Gemäss dem dargestellten Ausführungsbeispiel wird am zylindrischen Dosenmantel 240 unten ein Abschlusselement 242 in der Form eines Dosenbodens und oben in ein Abschlusselement 242 in der Form eines Halsteiles mit Ventilsitz eingesetzt. Es versteht sich von selbst, dass auch lediglich ein Abschlusselement 242 oder anders geformte Abschlusselemente 242 eingesetzt werden können. Der entstehende Dosenkörper entspricht einer Aerosoldose.

Gemäss Fig. 24a und 24b können auch Dosen mit einem speziellen Erscheinungsbild hergestellt werden. Dabei werden an einem Dosenmantel 240 gemäss Fig. 21c zwei Abschlusselemente 242 mit einer Abschlussnaht 245 fest geschweisst. Anschliessend wird eine äussere Bodenabdeckung 242' am Dosenboden angeordnet, vorzugsweise fest gesiegelt.

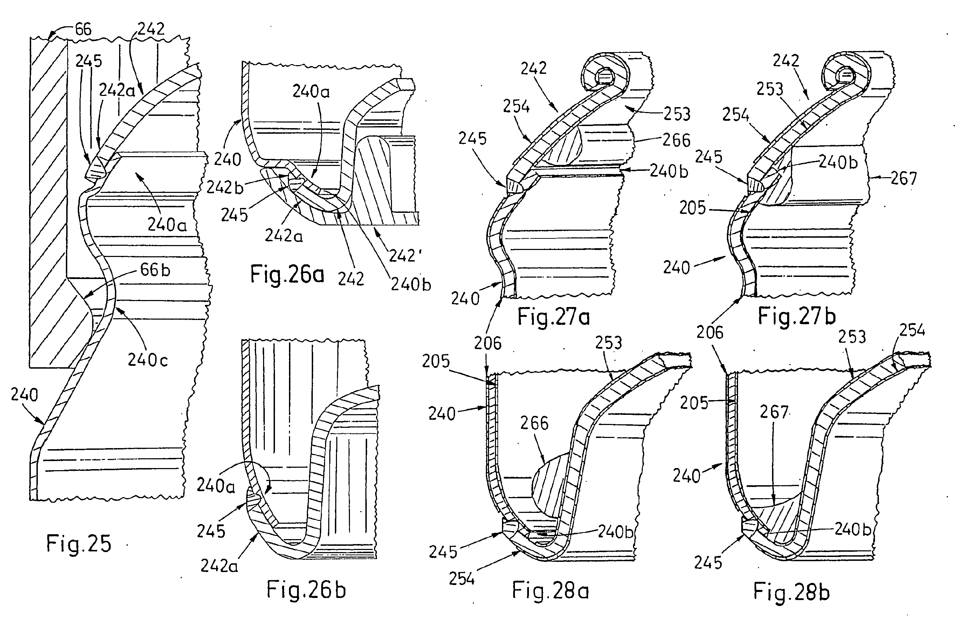

Fig. 26a zeigt eine Ausführungsform bei der die Bodenabdeckung 242' die Abschlussnaht 245 überdeckt. Dadurch wird eine Oxidation der Abschlussnaht 245 verhindert und eine ästhetisch ansprechende Dose bereitgestellt. Von aussen gesehen entspricht der Übergang vom Dosenmantel 240 zum Dosenboden der Form einer Aerosoldose aus Aluminium. Der untere Randbereich 240a des Dosenmantels 240 bildet gegen die Stirnfläche 240b hin eine verengte Naht-Kontaktfläche. Der Randbereich 242a des Abschlusselementes 242 ist gegen die Stirnfläche 242b hin aufgeweitet. Die Formen der beiden Randbereiche 240a und 242a sind so aneinander angepasst, dass beim Zusammenstossen des Dosenmantels 240 und des Abschlusselementes 242 ein gegenseitiger Anschlag erreicht wird, bei dem die beiden Teile entlang der Abschlussnaht 245 luftfrei aneinander anliegen. Beim Dosenmantel 240 geht der Randbereich 240 über eine Stufe und einen kleinen Krümmungsbereich in den zylindrischen Mantelbereich über. Die Stufe ist so gewählt, dass sie den Randbereich 242a des Abschlusselementes und die Bodenabdeckung 242' aufnehmen kann.

Fig. 25 zeigt einen Übergang vom Dosenmantel 240 zum oberen Abschlusselement 242 bei dem ein Eingriffsbereich 240c für einen Dosendeckel bzw. eine Kappe 66 ausgebildet ist. Kappe 66 greift mit einem Einrastbereich 66b in den Eingriffsbereich 240c ein. Der Übergang vom Dosenmantel 240 zum oberen Abschlusselement 242 ist mit einer kleinen Stufe und den aneinander angepassten Randbereichen 240a, 242a so ausgebildet, dass die Aussenform der Form einer gängigen Aerosoldose aus Aluminium entspricht. Die Abschlussnaht 245 ist im luftfreien Kantaktbereich zwischen dem Dosenmantel 240 und dem Abschlusselement 242 ausgebildet.

Die Randbereiche 240a und 242a können äusserst präzise ausgebildet werden. Der Randbereich 240a des Dosenmantels wird an der Aussenform geformt. Das Abschlusselement 242 und somit auch dessen Randbereich 242a wird vorzugsweise mit einem präzisen Presswerkzeug geformt.

Fig. 26b zeigt eine Ausführungsform, die der Bodenform von Getränkedosen entspricht. Auf eine Bodenabdeckung wird verzichtet. Die Ausrichtung der Randbereiche 240a und 242a weicht weniger stark von der zylindrischen Form ab als in der Fig. 26a.

Die Ausführungsformen gemäss der Figuren 27a, 27b, 28a, 28b zeigen eine Lösung mit der eine durchgängige Innenbarrieren aus Kunststoff gewährleistet werden kann. Dabei ist an der Innenseite des Dosenmantels 240 eine Innenfolie 205 angeordnet. Die Innenseite des Abschlusselementes 242 umfasst eine Innenbeschichtung 253. Beim Laserschweissen der Abschlussnaht 245 wird die Innenfolie 205 gegebenenfalls im Nahtbereich zerstört. Um den Nahtbereich und die Stirnfläche 240b des Dosenmantels 240 innen abdichten zu können, wird eine Dichtungswulst 266 ringförmig am Abschlusselement 242 angebracht. Nach dem Schweissen der Abschussnaht 245 wird im Bereich der Dichtungswulst Wärme zugeführt, so dass das schmelzbare Material der Dichtungswulst soweit fliesst, dass die Stirnfläche 240b und gegebenenfalls der Nahtbereich überdeckt sind. Am Ende des Fliessvorganges wird das Material der Dichtungswulst gekühlt, bzw. nicht mehr erwärmt, so dass es fest wird und eine durchgehende Dichtungsbrücke 267 zwischen der Innenfolie 205 und der Innenbeschichtung 253 des Abschlusselementes 242 bildet, die sich insbesondere auch über die Abschlussnaht 245 erstreckt. Um ein kontrolliertes Fliessen zu gewährleisten, muss das Material der Dichtungswulst bei der gewählten Temperatur die gewünschte Fliessfähigkeit haben. Gegebenenfalls wird der Dosenkörper zur Verbesserung des Fliessverhaltens um die Längsachse in Drehung versetzt. Dabei kann es zweckmässig sein die Dosenachse so auszurichten, dass zumindest ein Bereich der abzudeckenden Stirnfläche 240b und Abschlussnaht 245 in einer vertikalen Längsebene im tiefsten liegt.

Auf der Aussenseite des Dosenmantels 240 ist vorzugsweise eine Dekorfolie 206 angebracht. Das Abschlusselement 242 umfasst insbesondere eine Aussenbeschichtung 254. Die aneinander anliegenden Naht-Kontaktflächen sind beim Schweissen der Abschlussnaht 245 vorzugsweise unbeschichtet. Um eine unschöne Oxidation an der Dosenaussenseite ausschliessen zu können, wird die Abschlussnaht 245 gegebenenfalls so mit einem Beschichtungsmaterial ringförmig überdeckt, dass sich das Beschichtungsmaterial von der Aussenbeschichtung 254 bis zur Dekorfolie 206 erstreckt. Beim Einsetzen einer Bodenabdeckung 242' oder einer fest montieren Kappe 66 kann auf eine zusätzliche Überdeckung der Abschlussnaht verzichtet werden.

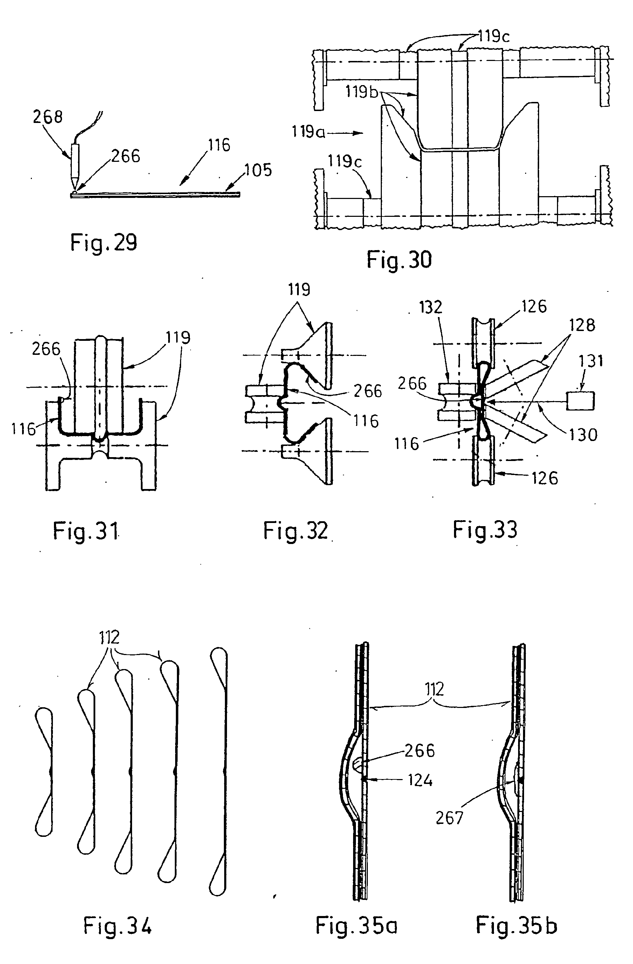

Fig. 29 zeigt Flachmaterial 116 bei dem von einer Auftragseinrichtung 268 entlang mindestens eines der beiden seitlichen Ränder vor dem Umformen und Schweissen der Längsnaht eine Dichtungswulst 266 angeordnet wird. Das Material der Dichtungswulst 266 soll nach dem Schweissen der Längsnaht 124 so auf die Längsnaht 124 gebracht werden, dass es beidseits der Längsnaht 124 dicht mit der Innenfolie 105 verbunden ist. Beim Material der Dichtungswulst 266 handelt es sich um ein Abdeckmittel, das analog zum Abdeckband 113 eine Vervollständigung der Innenbarriere ermöglicht. Die mindestens eine Dichtungswulst 266 wird mittels eines Schmelzschrittes so zum Fliessen gebracht, dass die Längsnaht 124 vom Material der Dichtungswulst überdeckt ist.

Fig. 30 zeigt ein Rollenset 119a einer zweiten Umformvorrichtung 111 b (Fig. 2). Damit die zweite Umformvorrichtung mit kleinem Aufwand an unterschiedliche Dosendurchmesser angepasst werden kann, ist das Rollenset 119a aus Formrollen und Abstandsrollen zusammengestellt. Die Formrollen 119b bilden am Flachmaterial 116 eine definierte Krümmungslinie aus. Bei unterschiedlichen Dosendurchmessern werden je entsprechende Abstandsrollen 119c eingesetzt. Gemäss den Figuren 31, 32 und 33 wird das Flachmaterial 116 mit weiteren Formrollen 119 in die geschlossene, flachgedrückte Form gebracht.

Damit das Material der Dichtungswulst 266 nach dem Schweissen der Längsnaht 124 (vgl. Fig. 5) mit kleinem Aufwand auf die Längsnaht 124 gebracht werden kann, wird das Flachmaterial 116 bzw. das Dosenmantel-Band gemäss den Figuren 32 und 33 um 90° gedreht, so dass gemäss Fig. 35a die Dichtungswulst 266 beim flach gedrückten Dosenmantel-Band direkt über der Längsnaht 124 verläuft. Durch das Zuführen von Wärme kann das Material der Dichtungswulst zum Fliessen gebracht werden. Der Fliessvorgang wird so gewählt, dass sich das Material nach dem Fliessvorgang gemäss Fig. 35b als durchgehende Dichtungsbrücke 267 über die Längsnaht 124 erstreckt. Gegebenenfalls wird das Dosenmantel-Band so ausgerichtet und umgeformt, dass sich die Längsnaht 124 am tiefsten Bereich befindet und das Material beim Schmelzschritt in diesen tiefsten Bereich fliesst.

Fig. 34 zeigt Dosenmantelbänder mit unterschiedlichen Umfängen, die alle mit kleinem Umbauaufwand auf der gleichen Anlage produziert werden können.

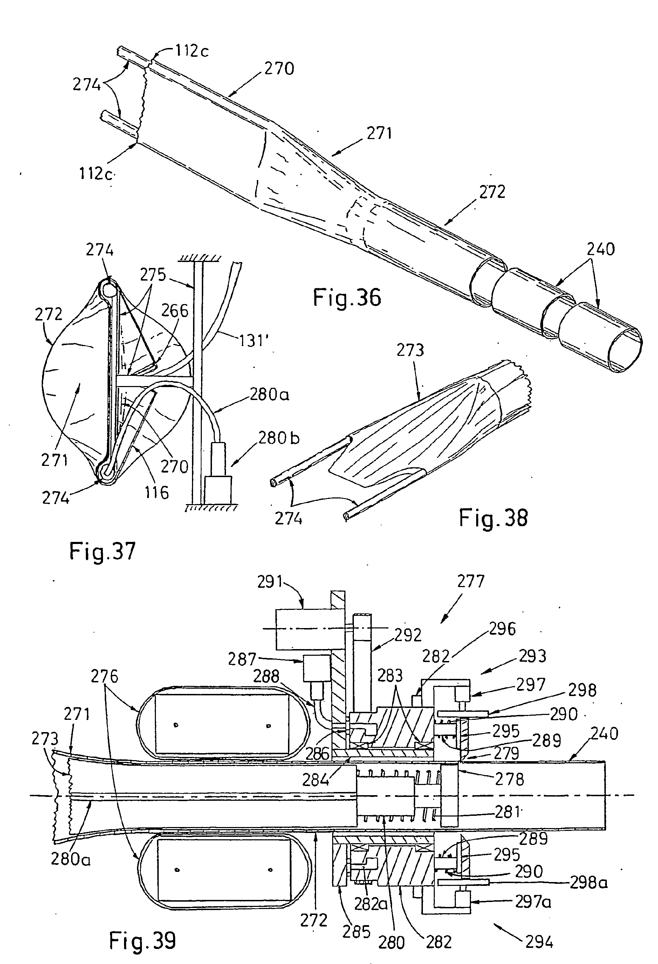

Die Fig. 36 bis 39 beschreiben eine Lösung zum Abtrennen von Dosenmänteln 240, die auch unabhängig von der Art der Verbindung zwischen dem Dosenmantel 240 und dem mindestens einen Abschlusselement 242 neu und erfinderisch ist.

Fig. 36 zeigt schematisch, wie ein flach gedrücktes Dosenmantel-Band 270 in einem Aufweitungsbereich 271 mit einem Aufweitungselement 273 im Innern des Dosenmantel-Bandes in ein im Querschnitt kreisförmiges Dosenmantel-Band 272 umgeformt wird. Vom kreisförmigen Dosenmantel-Band 272 werden Dosenmäntel 240 abgetrennt.

Das Aufweitungselement 273 wird von Haltestangen 274 gehalten, welche in den beiden Krümmungsbereichen 112c des flachgedrückten Dosenmantel-Bandes 270 geführt sind und sich gemäss Fig. 37 vom Aufweitungselement 273 bis zu einer Halterung 275 in einem Bereich erstrecken, in dem das bandförmige Flachmaterial 116 noch nicht geschlossen ist. Am Flachmaterial 116 ist gegebenenfalls eine Dichtungswulst 266 angeordnet. Das Flachmaterial wird mit nicht dargestellten Rollen in die flachgedrückte geschlossene Form umgeformt und mit dem durch eine Laserzuführung 130' geführten Laserstrahl geschweisst. Anschliessend wird gegebenenfalls die Dichtungswulst 266 mittels eines Schmelzvorganges auf die Innenseite der Längsnaht 124 gebracht. Dann gelangt das Dosenmantel-Band in den Aufweitungsbereich 271 und erhält schliesslich den kreisförmigen Querschnitt.

Fig. 39 zeigt eine Vorrichtung zum Abtrennen der Dosenmäntel 240. Förderelemente 276 liegen reibungsschlüssig am Dosenmantel-Band vorzugsweise am kreisförmigen Dosenmantel-Band 272 an und ziehen das Dosenmantel-Band durch den Aufweitungsbereich 271. Die Abtrennvorrichtung 277 umfasst eine Stützkante 278, welche im Wesentlichen kreisförmig geschlossen ist, in einer Normalebene zur Längsachse des Dosenmantel-Bandes verläuft, direkt an der Innenseite des Dosenmantel-Bandes anliegt und mit mindestens einem Schneidwerkzeug 279, vorzugsweise einem Schneidring, zusammenwirkt. Der Schneidring 279 wird beim Schneiden exzentrisch zur Stützkante 278 gedreht, so dass sich ein Schneidbereich einmal um die Längsachse dreht und dabei einen Abschnitt des Dosenmantel-Bandes abtrennt. Während des Schneidvorganges werden die Stützkante 278 und der Schneidring 279 mit dem Dosenmantel-Band vorgeschoben und nach dem Schneidvorgang wird der Schneidring 279 in eine konzentrische Lage zur Stützkante 278 gebracht und mit der Stützkante 278 gegen die Bewegung des Dosenmantel-Bandes zurück zur Ausgangslage vor dem Schneidvorgang gebracht.

Die Stützkante 278 ist am Aufweitungselement 273 gelagert. Um die Vor- und Rückwärtsbewegung kontrolliert durchzuführen, wird zwischen dem Aufweitungselement 273 und der Stützkante 278 beispielsweise eine Kolben-Zylinder-Einheit 280 und gegebenenfalls eine Rückstellfeder 281 angeordnet. Die Kolben-Zylinder-Einheit 280 wird von einem Druckfluid betätigt, wobei dazu eine Antriebseinrichtung 280b (Fig. 37) über eine Zuführleitung 280a mit der Kolben-Zylinder-Einheit 280 verbunden ist. Es versteht sich von selbst, dass auch eine andere aus dem Stande der Technik bekannte Stelleinrichtung, insbesondere eine elektrisch angetriebene, verwendet werden kann.

Der Schneidring 279 ist an einem Drehteil 282 in Achsrichtung beweglich gelagert. Der Drehteil 282 wiederum ist mittels Drehlagern 283 drehbar an einem Tragrohr 284 angeordnet, welches in Achsrichtung von einer Halteplatte 285 vorsteht. Zwischen der Halteplatte 285 und dem Drehteil 282 ist beispielsweise eine Dreheinführung 286 für ein Druckfluid vorgesehen. Das Druckfluid wird von einer Antriebseinrichtung 287 über eine Zuführleitung 288, die Dreheinführung 286 und einen Ringkanal 282a zu Kolben-Zylinder-Einheiten 289 geführt, welche am Drehteil 282 befestigt sind und den Schneidring 279 in Richtung der Längsachse bewegbar machen. Für die kontrollierte Vor- und Rückwärtsbewegung des Schneidringes 279 wird den Kolben-Zylinder-Einheiten 289 je eine Rückstellfeder 290 zugeordnet. Es versteht sich von selbst, dass auch eine andere aus dem Stande der Technik bekannte Stelleinrichtung, insbesondere eine elektrisch angetriebene, verwendet werden kann.

Für den Schneidvorgang muss der Schneidring 279 in Drehung sein und relativ zum Drehteil 282 in eine exzentrische Stellung gebracht werden. Ein Drehantrieb 291 hält den Drehteil 282 über eine Antriebsübertragung 292, vorzugsweise einen auf Rollflächen laufenden Riemen, in Drehung. Der Wechsel von der zentrischen zur exzentrischen Lage des Schneidringes 279 wird beispielsweise über zwei Stellvorrichtungen 293, 294 erzielt. Die erste Stellvorrichtung 293 drückt den Schneidring 279 in die exzentrische Lage bzw. die Schneidlage und die zweite Stellvorrichtung 294 drückt den Schneidring 279 in die zentrische Lage bei der der Schneidring 279 nicht mit dem Dosenmantel-Band in Kontakt ist. Damit der Schneidring 279 in diese beiden Lagen bewegbar ist, wird der Schneidring 279 über Geradführungen 295, die eine Bewegung quer zur Längsachse ermöglichen, an den Kolben-Zylinder-Einheiten 289 befestigt.

Während des Vorschubes, bzw. der Bewegung des Schneidringes 279 vom Drehteil 282 weg, muss der Schneidring 279 in der exzentrischen Lage sein. Während der Rückstellung und bei fehlender Bewegung in Längsrichtung, muss der Schneidring 279 im Wesentlichen zentrisch liegen. Während des Vorschubes führt die Antriebseinrichtung 287 Druckfluid mit zunehmendem Druck zu den Kolben-Zylinder-Einheiten 289. Ein erstes Kontrollventil 296 ist am Ringkanal 282a angeschlossen und so ausgebildet, dass bei zunehmendem Druck ein erster Stellzylinder 297 den Schneidring 279 mit einer ersten Betätigungsfläche 298 in die Schneidlage bringt. Während der Rückstellung und bei fehlender Bewegung in Längsrichtung nimmt der Druck im Ringkanal 282a ab, bzw. bleibt konstant, und das erste Kontrollventil 296 baut den Betätigungsdruck im erster Stellzylinder 297 soweit ab, dass ein zweiter Stellzylinder 298a aufgrund einer Vorspannung (Druckakkumulator, Feder) den Schneidring 279 mit einer zweiten Betätigungsfläche 298a in die zentrische Lage drückt.

Es versteht sich von selbst, dass für die Betätigung des ersten Stellzylinders 298 auch eine eigene Antriebseinrichtung mit Fluidzuführung vorgesehen werden kann. Anstelle eines Schneidringes 279 kann ein Schneidwerkzeug oder es können auch mehrerere Schneidwerkzeuge vorgesehen werden, wobei die Schneidwerkzeuge analog zum Schneidring 279 in die Schneidlage und in die kontaktfreie Lage gebracht werden. Wenn mehrere Schneidwerkzeuge am Umfang verteilt angeordnet sind, so kann bereits mit weniger als einer Drehung des Drehteiles 282 ein Dosenmantel 240 abgetrennt werden.

Die Vorschublänge während des Abtrennens hängt von der Vorschubgeschwindigkeit der Dosenmantel-Herstellung und von der Drehzahl des Drehteiles 282 ab. Beim Abtrennen mit einem Schneidring 279 und einer Vorschubgeschwindigkeit von 1m/sec sowie einer Drehzahl von 3000 Umdrehungen pro Minute beträgt die Vorschublänge 20mm. Mit der Verdoppelung der Drehzahl oder dem Einsatz von zwei gleichzeitig schneidenden Werkzeugen kann die Vorschublänge halbiert werden.

Die beschriebene Schneidvorrichtung kann generell eingesetzt werden zum Abtrennen von dünnwandigen Mantel- bzw. Rohrabschnitten, insbesondere zum Abtrennen von Dosenmänteln. Wenn die Längsschweissnaht an einem quer zur Längsachse umgeformten Flachmaterial mit kreisförmigem Querschnitt ausgebildet wird, so kann auf das Aufweiten in die kreisförmige Form verzichtet werden. Die erfinderische und neue Vorrichtung zum Herstellen von Mantelstücken umfasst eine Umformvorrichtung, die bandförmiges Flachmaterial 116 quer zur Bandachse kontinuierlich in eine geschlossene Form umformt, eine Schweissvorrichtung 231, welche eine Längsnaht schweisst, und eine Abtrennvorrichtung gemäss Fig. 39, welche Dosenmantelabschnitte 112 abtrennt. Im Innern des kontinuierlich gebildeten Dosenmantel-Bandes ist eine von der Umformvorrichtung her gehaltene Stützkante 278 angeordnet, welche im Wesentlichen kreisförmig geschlossen ist, in einer Normalebene zur Längsachse des Dosenmantel-Bandes verläuft, direkt an der Innenseite des Dosenmantel-Bandes anliegt und mit mindestens einem Schneidwerkzeug 279 zusammenwirkt. Das Schneidwerkzeug 279 ist zum Schneiden in Schneidstellung zur Stützkante 278 drehbar, so dass sich ein Schneidbereich einmal um die Längsachse dreht und dabei einen Abschnitt des Dosenmantel-Bandes abtrennt. Während des Schneidvorganges ist die Stützkante 278 und das mindestens eine Schneidwerkzeug 279 mit dem Dosenmantel-Band vorschiebbar und nach dem Schneidvorgang ist das mindestens eine Schneidwerkzeug 279 in eine kontaktfreie Lage und mit der Stützkante 278 gegen die Bewegung des Dosenmantel-Bandes zurück zur Ausgangslage vor dem Schneidvorgang bewegbar. Es versteht sich von selbst, dass anstelle des Schneidringes auch ein anderes Schneidwerkzeug eingesetzt werden kann.

Es versteht sich von selbst, dass die beschriebenen Merkmale zu verschiedenen Ausführungsformen kombiniert werden können und dass die beschriebenen neuen und erfinderische Lösungen auch unabhängig von den vorliegenden Patentansprüchen beansprucht werden können.

## Patentansprüche

1. Verfahren zum Herstellen eines Dosenkörpers (148, 248), bei welchem Verfahren aus einem Flachmaterial (103, 116) ein mit einer ersten Verbindung geschlossener Dosenmantel (140, 240) bereitgestellt und am geschlossenen Dosenmantel (140, 240) mit mindestens einer weiteren Verbindung mindestens ein Abschlusselement (142, 242) angeordnet wird, wobei mindestens eine der weiteren Verbindungen als Laser-Schweissnaht ausgeführt wird, welche eine ringförmig geschlossene Abschlussnaht (145, 245) zwischen dem geschlossenen Dosenmantel (140, 240) und dem mindestens einen Abschlusselement (142, 245) bildet, **dadurch gekennzeichnet, dass**
der Dosenmantel (140, 240) mit einem Blähvorgang von innen an eine Aussenform (146, 246) angepresst wird,
vor dem Schweissen der Abschlussnaht (145, 245) aneinander angepasste Naht-Kontaktflächen des Dosenmantels (140, 240) und des Abschlusselementes (142, 242) als von der Zylinderform abweichende, in Richtung der Dosenachse aufgeweitete bzw. verengte, ringförmig geschlossene Randbereiche (140a, 142a, 240a, 242a) ausgebildet werden,
für das Schweissen der Abschlussnaht (145, 245) der Dosenmantel (140, 240) und das mindestens eine Abschlusselement (142, 242) bis zum Erreichen eines gegenseitigen Anschlages mit den Randbereichen (140a, 142a, 240a, 242a) zusammen gestossen werden, wobei von den Stirnflächen (140b, 142b, 240b, 242b) der beiden Randbereiche (140a, 142a, 240a, 242a) eine innen und eine aussen am Dosenkörper (148, 248) liegt und
die Abschlussnaht (145, 245) beim gegenseitigen Anschlag zwischen luftfrei aneinander anliegenden Naht-Kontaktflächen ausgebildet wird.

2. Verfahren nach Anspruch 1, **dadurch gekennzeichnet, dass** die erste Verbindung als Längsnaht (124) in der Form einer gestossenen Laser-Schweissnaht ausgeführt wird, bei der die beiden seitlichen Stirnflächen (112e) des Flachmaterials (103, 116) die Naht-Kontaktflächen bilden und die Wandstärke des Dosenmantels (140, 240) entlang des gesamten Umfangs im Wesentlichen konstant ist.

3. Verfahren nach Anspruch 1 oder 2 , **dadurch gekennzeichnet, dass** die Naht-Kontaktfläche des Dosenmantels (140, 240) vor dem Schweissen einer Abschlussnaht (145, 42, 245) als gegen die Stirnseite des Dosenmantels (140, 240) hin verengter Randbereich (140a, 60a, 240a) ausgebildet wird.

4. Verfahren nach einem der Ansprüche 1 bis 3, **dadurch gekennzeichnet, dass** der Blähvorgang vor dem Schweissen einer Abschlussnaht (145, 245) durchgeführt wird, indem der Dosenmantel (140, 240) in eine Aussenform (146, 246) eingesetzt und von innen an diese Aussenform (146, 246) angepresst wird, wobei vorzugsweise mindestens ein Randbereich (140a, 240a) bei einer Stirnseite, gegebenenfalls ein Eingriffsbereich (240c) für einen Dosendeckel und insbesondere Dekorstrukturen (240d), ausgeformt werden.

5. Verfahren nach einem der Ansprüche 1 bis 4, **dadurch gekennzeichnet, dass** der Dosenkörper (148, 248) nach dem Schweissen mindestens einer Abschlussnaht (145, 245) in eine Aussenform (146, 246) eingesetzt und mit einem Blähvorgang von innen an diese Aussenform (146, 246) angepresst wird.

6. Verfahren nach einem der Ansprüche 1 bis 5, **dadurch gekennzeichnet, dass** beim Blähvorgang ein mittels Druckflüssigkeit ausdehnbares Schlauchelement im Innern des Dosenmantels (140, 240) angeordnet, durch das Zuführen von Druckflüssigkeit mit der Dosenwand (140, 240) gegen die Aussenform (146, 246) gepresst und nach dem Abführen von Druckflüssigkeit wieder vom Dosenmantel (140, 240) getrennt wird.

7. Verfahren nach einem der Ansprüche 1 bis 6, **dadurch gekennzeichnet, dass** der Dosenmantel (140, 240) auf der Innenseite eine Innenfolie (105), das mindestens eine Abschlusselement (142, 242) auf der Innenseite eine Kunststoff-Innenbeschichtung (153, 253) sowie eine ringförmig geschlossene Dichtungswulst umfasst und ein Wärmebehandlungsschritt zum Ausbilden einer Dichtungsbrücke (267) zwischen der Innenfolie (105) und der Innenbeschichtung (153, 253) durchgeführt wird, wobei die Dichtungsbrücke (267) die im Doseninnern liegende Stirnfläche (140b, 142b, 240b) und gegebenenfalls auch die Abschlussnaht (145, 42, 245) überdeckt..

8. Verfahren nach einem der Ansprüche 1 bis 7, **dadurch gekennzeichnet, dass** die aneinander anliegenden Naht-Kontaktflächen beim Schweissen der zumindest einen Abschlussnaht (145, 245) unbeschichtet sind.

9. Verfahren nach einem der Ansprüche 1 bis 8, **dadurch gekennzeichnet, dass** zumindest eine Abschlussnaht (145, 245) an der Aussenseite des Dosenkörpers (148, 248) abgedeckt wird, wobei bei einem Dosenboden vorzugsweise eine Bodenabdeckung angeordnet, insbesondere aussen am Dosenboden (163) fest gesiegelt wird.

10. Verfahren zum Herstellen eines Dosenkörpers (148, 248) nach einem der Ansprüche 1 bis 9, **dadurch gekennzeichnet, dass** zum Bereitstellen von Dosenmänteln (140, 240) bandförmiges Flachmaterial (116) quer zur Bandachse kontinuierlich in eine geschlossene Form umgeformt wird und nach dem Schweissen einer Längsnaht (124) Dosenmantelabschnitte (112) vom Dosenmantel-Band abgetrennt werden, wobei zum Abtrennen im Innern des kontinuierlich gebildeten Dosenmantel-Bandes eine Stützkante (278) bereitgestellt wird, welche im Wesentlichen kreisförmig geschlossen ist, in einer Normalebene zur Längsachse des Dosenmantel-Bandes verläuft, direkt an der Innenseite des Dosenmantel-Bandes anliegt und mit mindestens einem Schneidwerkzeug (279) zusammenwirkt, das beim Schneiden in Schneidlage entlang der Stützkante gedreht wird, so dass sich ein Schneidbereich einmal um die Längsachse dreht und dabei einen Abschnitt des Dosenmantel-Bandes abtrennt, wobei während des Schneidvorganges die Stützkante (278) und das mindestens eine Schneidwerkzeug (279) mit dem Dosenmantel-Band vorgeschoben wird und nach dem Schneidvorgang das mindestens eine Schneidwerkzeug (279) in eine kontaktfreie Lage zur Stützkante (278) gebracht und mit der Stützkante (278) gegen die Bewegung des Dosenmantel-Bandes zurück zur Ausgangslage vor dem Schneidvorgang gebracht wird.

11. Verfahren nach Anspruch 10, **dadurch gekennzeichnet, dass** das bandförmige Flachmaterial zum Schweissen in eine flachgedrückte Form mit zwei Krümmungsbereichen (112c) gebracht wird und im Innern des Dosenmantel-Bandes ein Aufweitungselement (273) angeordnet ist, welches über eine Führungsvorrichtung (280) mit der Stützkante (278) verbunden ist und das flachgedrückte Dosenmantel-Band in den kreisförmigen Querschnitt der Stützkante (278) umformt, wobei das Aufweitungselement (273) an zwei Haltestangen (274) befestigt ist, die in den beiden Krümmungsbereichen (112c) des flachgedrückten Dosenmantel-Bandes geführt sind und sich vom Aufweitungselement (273) bis zu einer Halterung (275) in einen Bereich erstrecken, in dem das bandförmige Flachmaterial (116) noch nicht geschlossen ist.

12. Dosenkörper (148, 248), mit einem Dosenmantel (140, 240), der ein Flachmaterial (103, 116) und eine gestossene Laser-Längsnaht (124) umfasst, und mit mindestens einem Abschlusselement (142, 242), das über eine ringförmig geschlossene Laser-Abschlussnaht (145, 245) am Dosenmantel (140, 240) angeordnet ist, **dadurch gekennzeichnet, dass**
der Dosenmantel (140, 240) mit einem Blähvorgang von innen an eine Aussenform (146, 246) angepresst wurde,
bei der Abschlussnaht (145, 245) aneinander angepasste Naht-Kontaktflächen des Dosenmantels (140, 240) und des Abschlusselementes (142, 242) als von der Zylinderform abweichende, in Richtung der Dosenachse aufgeweitete bzw. verengte, ringförmig geschlossene Randbereiche (140a, 142a, 240a, 242a) ausgebildet sind,
von den Stirnflächen (140b, 142b, 240b, 242b) der beiden Randbereiche (140, 142, 240, 242) eine innen und eine aussen am Dosenkörper (148, 248) liegt und die
Abschlussnaht (145, 245) beim gegenseitigen Anschlag zwischen luftfrei aneinander anliegenden Naht-Kontaktflächen ausgebildet ist.

13. Dosenkörper (148, 248) nach Anspruch 12, **dadurch gekennzeichnet, dass** an beiden Stirnseiten des Dosenmantels (140, 24, 240) gegen die Stirnflächen (140b, 240b) hin verengte Randbereiche (140a, 60a, 240a) ausgebildet sind an denen je ein Abschlusselement (142, 31a, 31b, 242) mit einer Abschlussnaht (145, 42, 245) befestigt ist, wobei bei beiden Abschlusselementen (142, 31a, 31 b, 242) die Stirnflächen (140b, 240b) des Dosenmantels (140, 24, 240) im Doseninnern und die Stirnflächen (142b, 242b) der Abschlusselemente (142, 31a, 31b) an der Dosenaussenseite angeordnet sind.

14. Dosenkörper (148) nach Anspruch 12 oder 13, **dadurch gekennzeichnet, dass** der Dosenmantel (140, 240) auf der Innenseite eine Innenfolie (105) und das mindestens eine Abschlusselement (142, 242) auf der Innenseite eine Kunststoff-Innenbeschichtung (153, 253) umfasst, und eine mit einem Wärmebehandlungsschritt ausgebildete Dichtungsbrücke (267) zwischen der Innenfolie (105) und der Innenbeschichtung (153, 253) ausgebildet ist, wobei die Dichtungsbrücke (267) die im Doseninnern liegende Stirnfläche (140b, 142b, 240b) und gegebenenfalls auch die Abschlussnaht (145, 245) überdeckt.

15. Dosenkörper (148, 248) nach einem der Ansprüche 12 bis 14, **dadurch gekennzeichnet, dass** der Dosenkörper (148, 248) als Aerosoldose (156) mit zwei Abschlusselementen (31 a, 31b, 142, 242) ausgebildet ist, wobei das eine Abschlusselement (31 b, 142, 242) einen Boden und das andere Abschlusselement (31 a, 142, 242) einen Ventilsitz oder aber ein Ventil (62) umfasst, und vorzugsweise aussen am Boden eine Bodenabdeckung (242') angeordnet ist, welche insbesondere die Abschlussnaht (145, 245) des Bodens überdeckt.

16. Dosenkörper (148, 248) nach einem der Ansprüche 12 bis 14, **dadurch gekennzeichnet, dass** der Dosenkörper (148, 248) als Getränkedose (156) mit zwei Abschlusselementen (157, 159) ausgebildet ist, wobei das eine Abschlusselement (157) eine Aufreissvorrichtung (158) und das andere Abschlusselement (159) eine verschliessbare Befüllöffnung (160) umfasst, oder dass der Dosenkörper (148, 248) als Getränkeflasche (162) ausgebildet ist, wobei das eine Abschlusselement (164) eine Gewindeöffnung (165) und das andere Abschlusselement (163) einen Boden umfasst.

17. Vorrichtung zum Durchführen eines Verfahrens nach einem der Ansprüche 1 bis 11, welche Vorrichtung aus einem Flachmaterial (103, 116) einen mit einer ersten Verbindung geschlossenen Dosenmantel (140, 240) bereitstellbar und am geschlossenen Dosenmantel (140, 240) mit einer weiteren Verbindung mindestens ein Abschlusselement (142, 242) befestigbar macht, und dazu eine Schweisshalterung (243) und eine Laserquelle (231) umfasst, wobei die Schweisshalterung (243) zumindest ein Abschlusselement (142, 242) und einen Dosenmantel (140, 240) drehbar macht und die Laserquelle (231) beim Drehen der beiden Teile eine ringförmig geschlossene Abschlussnaht (145, 245) schweissbar macht, **dadurch gekennzeichnet, dass** die Vorrichtung eine Aussenform (146, 246) umfasst und der Dosenmantel (140, 240) mit einem Blähvorgang von innen an die Aussenform (146, 246) anpressbar ist, wobei zumindest die Randbereiche (140a, 240a) bei den Stirnseiten derart ausgeformt werden, dass diese als Naht-Kontaktflächen des Dosenmantels (140, 240)von der Zylinderform abweichen, und in Richtung der Dosenachse aufgeweitete bzw. verengte, ringförmig geschlossene Randbereiche (140a, 142a, 240a, 242a) bilden;
so dass, wenn die Schweisshalterung (243) das zumindest eine Abschlusselement (142, 242) an eine Stirnseite des Dosenmantels (140, 240) bis zu einem gegenseitigen Anschlag presst, aneinander gepresste Naht-Kontaktflächen des Dosenmantels (140, 240) und entsprechend geformten Naht-Kontaktflächen des Abschlusselementes (142, 242) aneinander anliegen, wobei von den Stirnflächen (140b, 142b, 240b, 242b) der beiden Randbereiche (140a, 142a, 240a, 242a) eine innen und eine aussen am Dosenkörper (148, 248) liegt.

18. Vorrichtung nach Anspruch 17, **dadurch gekennzeichnet, dass** für den Blähvorgang ein mittels Druckflüssigkeit ausdehnbares Schlauchelement in das Innere des Dosenmantels (140, 240) bewegbar, durch das Zuführen von Druckflüssigkeit mit der Dosenwand (140, 240) gegen die Aussenform (146, 246) pressbar und nach dem Abführen von Druckflüssigkeit wieder vom Dosenmantel (140, 240) trennbar ist.

19. Vorrichtung nach Anspruch 17 oder 18, **dadurch gekennzeichnet, dass** die Vorrichtung den Dosenmantel (140, 240) vor dem Schweissen einer Abschlussnaht (145, 245) in die Aussenform (146, 246) einsetzbar macht, wobei mit dem Blähvorgang vorzugsweise mindestens ein Randbereich (140a, 240a) bei einer Stirnseite, gegebenenfalls ein Eingriffsbereich (240c) für einen Dosendeckel und insbesondere Dekorstrukturen (240d), ausgeformt werden.

20. Vorrichtung nach einem der Ansprüche 17 bis 19, **dadurch gekennzeichnet, dass** zum Bereitstellen des geschlossenen Dosenmantels (140, 240) eine Umformvorrichtung bandförmiges Flachmaterial (116) quer zur Bandachse kontinuierlich in eine geschlossene Form umformbar macht, eine Schweissvorrichtung (231) eine Längsnaht schweissbar macht, und eine Abtrennvorrichtung Dosenmantelabschnitte (112) abtrennbar macht wobei im Innern eines kontinuierlich gebildeten Dosenmantel-Bandes eine von einer Umformvorrichtung her gehaltene Stützkante (278) angeordnet ist, welche im Wesentlichen kreisförmig geschlossen ist, in einer Normalebene zur Längsachse des Dosenmantel-Bandes verläuft, direkt an der Innenseite des Dosenmantel-Bandes anliegt und mit mindestens einem Schneidwerkzeug (279) zusammenwirkt, das zum Schneiden in Schneidlage entlang der Stützkante drehbar ist, so dass sich ein Schneidbereich einmal um die Längsachse dreht und dabei einen Abschnitt des Dosenmantel-Bandes abtrennt, wobei während des Schneidvorganges die Stützkante (278) und das mindestens eine Schneidwerkzeug (279) mit dem Dosenmantel-Band vorschiebbar ist und nach dem Schneidvorgang das mindestens eine Schneidwerkzeug (279) in eine kontaktfreie Lage und mit der Stützkante (278) gegen die Bewegung des Dosenmantel-Bandes zurück zur Ausgangslage vor dem Schneidvorgang bewegbar ist.

## Claims

1. A method for producing a can body (148, 248), in which method a closed can jacket (140, 240) is prepared from a flat material (103, 116) by a first connection, and at least one closing element (142, 242) is arranged on the closed can jacket (140, 240) by at least one other connection, at least one of the other connections being realised as a laser welding seam, which forms an annularly closed terminal seam (145, 245) between the closed can jacket (140, 240) and the at least one closing element (142, 242), **characterised in that**
the can jacket (140, 240) is pressed from the interior against an outer mould (146, 246) by an inflating procedure,
seam contact surfaces adapted to each other of the can jacket (140, 240) and of the closing element (142, 242) are formed as annularly closed fringe areas (140a, 142a, 240a, 242a) expanded in the direction of the can axis or narrowed,
that for welding the terminal seam (145, 245) the can jacket (140, 240) and the at least one closing element (142, 242) are pushed together up to the fringe areas (140a, 142a, 240a, 242a) reaching a mutual contact, wherein of the frontal edge surfaces (140b, 142b, 240b, 242b) of the two fringe areas (140a, 142a, 240a, 242a) one is located at the inner side, and one at the outer side of the can body (148, 248), and
that the terminal seam (145, 245) is formed at the mutual abutment between air-free mutually engaging seam contact surfaces.

2. Method according to claim 1, **characterised in that** the first connection is realised as a longitudinal seam (124) in the form of a butt joint laser welding seam, where the two lateral frontal edge surfaces (112e) of the flat material (103, 116) form the seam contact surfaces, and the wall thicknesses of the can jacket (140, 240) are substantially constant along the whole circumference.

3. Method according to claim 1 or 2, **characterised in that** the seam contact surface of the can jacket (140. 240) is formed as a fringe area (140a, 60a, 240a) narrowed towards the front side of the can jacket (140, 240) prior to welding a terminal seam (145, 42, 245).

4. Method according to any of claims 1 to 3, **characterised in that** the inflating procedure is executed prior to welding a terminal seam (145, 245) by inserting the can jacket (140, 240) into an outer mould (146, 246) and by pressing it from inside onto this outer mould, wherein preferably at least one fringe area (140a, 240a) is formed at a frontal side, optionally an engagement region (240c) for a can lid, and in particular décor structures (240d).

5. Method according to any of claims 1 to 4, **characterised in that** the can body (148, 248), after welding at least one terminal seam (145, 245), is inserted into an outer mould (146, 246), and is pressed from inside against this outer mould (146, 246) by an inflating procedure.

6. Method according to any of claims 1 to 5, **characterised in that** with the inflating procedure, a hose element inflatable by a liquid under pressure is arranged in the interior of the can jacket (140, 240), is pressed together with the can wall (140, 240) against the outer mould (146, 246) by supplying liquid under pressure, and is separated again from the can jacket (140, 240) after discharging the liquid under pressure.

7. Method according to any of claims 1 to 6, **characterised in that** the can jacket (140, 240) comprises an inner foil (105) at the inner side, the at least one closing element (142, 242) comprises a plastic inner coating (153, 253) as well as a closed sealing bulge, and a heat treatment step is carried out for forming a sealing bridge (267) between said inner foil (105) and said inner coating (153, 253), the sealing bridge (267) covering the frontal edge surface (140b, 142b, 240b) and, optionally, the terminal seam (145, 42, 245).

8. Method according to any of claims 1 to 7, **characterised in that** the seam contact surfaces, engaging each other, are uncoated during welding said at least one terminal seam (145, 245).

9. Method according to any of claims 1 to 8, **characterised in that** at least one terminal seam (145, 245) is covered at the outer side of the can body (148, 248), wherein preferably, in the case of a can bottom, a bottom covering is arranged, and in particular is firmly sealed outside at the can bottom.

10. Method for producing a can body (148, 248) according to any of claims 1 to 9, **characterised in that** for preparing can jackets (140, 240), ribbon-like flat material (116) is continuously transformed transversely to the ribbon axis into a tubular shape, and after welding a longitudinal seam (124) can jacket sections (112) are severed from the can jacket ribbon, wherein, for severing, a supporting edge (278) is provided in the interior of the continuously formed can jacket ribbon, which is substantially circularly closed, extends in a plane normal to the longitudinal axis of the can jacket ribbon, engages directly the inner side of the can jacket ribbon, and cooperates with at least one cutting tool (279), which with cutting in cutting position is turned along the supporting edge, so that a cutting region rotates once about the longitudinal axis, thus severing one section of the can jacket ribbon, wherein the supporting edge and the at least one cutting tool (279) are advanced together with the can jacket ribbon during the severing procedure, and after the severing procedure, the at least one cutting tool (279) is brought into a contact-free position to the supporting edge (278) and together with the supporting edge (278) is returned into the initial position prior to the severing procedure against the movement of the can jacket ribbon.

11. Method according to claim 10, **characterised in that** the ribbon-like flat material, for welding, is brought into a flat-pressed shape having two regions of curvature (112c) and an expansion element (273) is arranged in the interior of the can jacket ribbon and is connected to the supporting edge (278) by guidance means (280) and transforms the flat pressed can jacket ribbon into the circular cross-section of the supporting edge (278), wherein the expansion element (273) is fastened to two holding rods (274) guided in the two regions of curvature (112c) of the flat pressed can jacket ribbon and extend from the expansion element (273) up to a holder (275) into a region, where the ribbon-like flat material (116) is not yet closed.

12. Can body (148, 248) comprising a can jacket (140, 240) which includes a flat material (103, 116) and a butt joint longitudinal laser welding seam (124), and comprising at least one closing element (142, 242) arranged on the can jacket (140, 240) by an annularly closed laser, terminal seam (145, 245),
**characterised in that**
the can jacket (140, 240) has been pressed from the inside to an outer mould (146, 246) by an inflating procedure,
seam contact surfaces fitted to one another of the can jacket (140, 240) and of the closing element (142, 242) are formed at the terminal seam (145, 245) as annularly closed fringe areas (140a, 142a, 240a, 242a) deviating from a cylindrical shape, and expanded in the direction of the can's axis or narrowed,
one of the frontal edge surfaces (140b, 142b, 240b, 242b) of the two fringe areas (140a, 142a, 240a, 242a) is located at the inner side, and one at the outer side of the can body (148, 248), and
the terminal seam (145, 245) is formed at the mutual engagement between air-free engaging seam contact surfaces.

13. Can body (148, 248) according to claim 12, **characterised in that** fringe areas (140a, 60a, 240a) narrowed towards the frontal edge surfaces (140b, 240b) are formed at both frontal sides of the can jacket (140, 24, 240), to which a closing element (142, 31 a, 31 b, 242) is fastened by a terminal seam (145, 245), wherein at both closing elements (142, 31 a, 31 b, 242) the frontal edge surfaces (140b, 240b) of the can jacket (140, 24, 240) are located at the inner side of the can, and the frontal surfaces (142b, 242b) of the closing elements (142, 31 a, 31 b, 242) are locted at the outer side of the can.

14. Can body (148) according to claim 12 or 13, **characterised in that** the can jacket (140, 240) comprises an inner film (105) at the inner side, and the at least one closing element (142, 242) comprises a plastic inner coating (153, 253) at the inner side, and a sealing bridge (267) formed by a heat treatment between the inner film (105) and the inner coating (153, 253), wherein the sealing bridge (267) covers the frontal edge surface (104b, 142b, 240b) situated in the can's interior and, optionally, the terminal seam (145, 245) too.

15. Can body (148, 248) according to any of claims 12 to 14, **characterised in that** the can body (148, 248) is formed as an aerosol can (156) having two closing elements (31 a, 31 b, 142, 242), one closing element (31 b, 142, 242) comprising a bottom and the other closing element (31 a, 142, 242) comprising a valve seat or even a valve (62), preferably a bottom cover (242') being arranged outside at the bottom, which in particular covers the terminal seam (145, 245) of the bottom.

16. Can body (148, 248) according to any of claims 12 to 14, **characterised in that** the can body (148, 248) is formed as a beverage can (156) having two closing elements (157, 159), one closing element (157) comprising a tear up device (158) and the other closing element (159) comprising a closable filling opening (160), or that the can body (148, 248) is formed as a beverage bottle (612), wherein one closing element (164) comprises a threaded opening (165) and the other closing element (163) comprises a bottom.

17. Device for carrying out the method according to any of claims 1 to 11, said device rendering preparable a can jacket (140, 240) closed by a first connection from a flat material, and rendering it possible to fasten at least one closing element (142, 242) by a further connection at the closed can jacket (140, 240), and to this end comprises a welding holder (243) and a source of laser (231), the welding holder (243) rendering rotatable at least one closing element (142, 242) and the can jacket (140, 240), while the source of laser (231) renders weldable an annularly closed terminal seam (145, 245) during rotation of both parts, **characterised in that** the device comprises an outer mould (146, 246), and the can jacket (140, 240) can be pressed from the interior against the outer mould (146, 246) by an inflating procedure, wherein at least the fringe areas (140a, 240a) are formed at the frontal sides in such a way, that they deviate from a cylindrical shape as seam contact surfaces of the can jacket (140, 240) and form annularly closed fringe areas (140a, 142a, 240a, 242a) expanded in the direction of the can axis or narrowed;
so that, if the welding holder (243) pushes the at least one closing element (142, 242) to frontal side of the can jacket (140, 240) up to abutting each other, seam contact surfaces pressed together of the can jacket (140, 240) and correspondingly shaped seam contact surfaces of the closing element (142, 242) engage each other, wherein among the frontal edge surfaces (140b, 142b, 240b, 242b) of the two fringe areas (140a, 142a, 240a, 242a) one is located at the inner side, and one at the outer side of the can body (148, 248).

18. Device according to claim 17, **characterised in that** a hose element expandable by a liquid under pressure may be introduced into the interior of the can jacket (140, 240), may be pressed together with the can wall (140, 240) against the outer mould (146, 246) by supplying liquid under pressure, and is separable again from the can jacket (140, 240) after discharging the liquid under pressure.

19. Device according to claim 17 or 18, **characterised in that** the device renders the can jacket (140, 240) insertable into the outer mould (146, 246) prior to welding a terminal seam (145, 245), wherein at least one fringe area (140a, 240a) at one frontal side is formed with the inflating procedure, optionally an engagement region (240c) for a can lid and, in particular, décor structures (240d).

20. Device according to any of claims 17 to 19, **characterised in that** for preparing the closed can jacket (140, 240) a transforming device renders ribbon-like flat material continuously transformable transversely to the ribbon axis into a tubular shape, welding means (231) render weldable a longitudinal seam, and severing means renders severable section of can jacket, wherein a supporting edge (278), held by a transforming device is arranged in the interior of a continuously formed can jacket ribbon and is substantially circularly closed, extends in a plane normal to the longitudinal axis of the can jacket ribbon, engages directly the inner side of the can jacket ribbon, and cooperates with at least one cutting tool, which is rotatable along the supporting edge for cutting in cutting position, so that a cutting section rotates once about the longitudinal axis, thus severing one section of the can jacket ribbon, wherein during the severing procedure the supporting edge (278) and the at least one cutting tool (279) are advanced together with the can jacket ribbon and the at least one cutting tool (279) is moved into a contact-free position and, together with the supporting edge (278), is returned to the initial position prior to the severing procedure, contrary to the movement of the can jacket ribbon.

## Revendications

1. Procédé pour produire un corps de boîte (148, 248), où on prépare dans ce procédé une enveloppe de boîte (140, 240) fermée par une première connexion à partir d'un matériau plat (103, 116) et on dispose au moins un élément de couverture (142, 242) par au moins une autre connexion à l'enveloppe fermée de boîte, dans lequel au moins une des autres connexions est formée comme une soudure à laser, qui forme une soudure de terminaison (145, 245) annulaire fermée entre l'enveloppe de boîte (140, 240) fermée et l'au moins un élément de couverture (142, 242), **caractérisé en ce, que**
l'enveloppe de boîte (140, 240) est pressée par une procédure de gonflement de l'intérieur vers une moule extérieure (146, 246),
avant du soudage de la soudure de terminaison (145, 245), des surfaces de contact de joint de l'enveloppe de boîte (140, 240) et de l'élément de couverture (142, 242) sont formées comme des régions de bord (140a, 142a, 240a, 242a) évasées ou rétrécies en direction de l'axe de boîte, fermées de forme annulaire,
que l'enveloppe de boîte (140, 240) et l'au moins un élément de couverture (142, 242) sont mis bout à bout jusqu'à ce qu'une butée mutuelle soit atteinte pour le soudage de la soudure de terminaison (145, 245), où une des surfaces frontales (140b, 142b, 240b, 242b) des deux régions de bord (140a, 142a, 240a, 242a) est située à l'intérieur du corps de boîte (148, 248), et l'autre à l'extérieur, et
la soudure de terminaison (145, 245) est formée entre les surfaces de contact de soudure étant mis en position adjacent, qui contactent l'une à l'autre sans de l'aire.

2. Procédé selon la revendication 1, **caractérisé en ce, que** la première connexion est réalisée comme un joint longitudinal (124) en forme d'un joint à soudage à laser mis bord à bord, dans lequel les deux surfaces latérales de front (112e) du matériau plat (103, 116) forment les surface de contact du joint, l'épaisseur de l'enveloppe de boîte (140, 240) étant sensiblement constante le long de la circonférence entière.

3. Procédé selon la revendication 1 ou 2, **caractérisé en ce, que** la surface de contact de joint de l'enveloppe de boîte (140, 240) et formée comme une région de bord (140a, 60a, 240a) rétrécie vers le côté frontal de l'enveloppe de boîte (140, 240) avant le soudage d'une soudure de terminaison (145, 42, 245).

4. Procédé selon une quelconque des revendications 1 à 3, **caractérisé en ce, que** la procédure de gonflement et réalisée avent le soudage d'une soudure de terminaison (145, 42, 245), en introduisant l'enveloppe de boîte (140, 240) dans une moule extérieure (146, 246) et en pressant celui-ci de l'intérieur à cette moule extérieure (146, 246), dans lequel de préférence au moins une région de bord (140a, 240a) est formée à un côté frontal, le cas échéant, une région d'engrènement (240c) pour un couvercle de boîte et. en particulier, pour des structures de décor (240d).

5. Procédé selon une quelconque des revendications 1 à 4, **caractérisé en ce, que** le corps de boîte (148, 248) est introduit dans une moule extérieure après le soudage d'au moins une soudure de terminaison (145, 245), et est pressé de l'intérieur à cette moule extérieure (146, 246) par une procédure de gonflement.

6. Procédé selon une quelconque des revendications 1 à 5, **caractérisé en ce, que** lors de la procédure de gonflement, un élément de tuyau dilatable par un liquide sous pression est disposé à l'intérieur de l'enveloppe de boîte (140, 240), est pressé avec la paroi de boîte (140, 240) contre la moule extérieure (146, 246) par une alimentation en liquide sous pression, et est séparé de nouveau de l'enveloppe de boîte (140, 240) après la décharge du liquide sous pression.

7. Procédé selon une quelconque des revendications 1 à 6, **caractérisé en ce, que** l'enveloppe de boîte (140, 240) comprend au côté intérieur une feuille intérieure (105), que l'au moins un élément de couverture (142, 242) comprend au côté intérieur un revêtement interne synthétique (153, 253) ainsi qu'un boudin de joint, et une étape de traitement thermique est exécutée pour former un pont de joint (267) entre la feuille intérieure (105) et le revêtement interne (153, 253), le pont de joint (267 recouvrant la surface frontale (140b, 142b, 240b) située à l'intérieur de la boîte et, le cas échéant, la soudure de terminaison (145, 42, 245) aussi.

8. Procédé selon une quelconque des revendications 1 à 7, **caractérisé en ce, que** les surfaces de contact de joint contactant l'une à l'autre ne sont pas revêtues lors du soudage de la soudure de terminaison (145, 245).

9. Procédé selon une quelconque des revendications 1 à 8, **caractérisé en ce, qu'**au moins une soudure de terminaison (145, 245) au côté extérieur du corps de boîte (148, 248) est revêtue, dans lequel de préférence un revêtement de fond est disposé au fond de boîte, et en particulier est fermement scellé à l'extérieur du fond de boîte (163).

10. Procédé pour produire un corps de boîte (148, 248) selon une quelconque des revendications 1 à 9, **caractérisé en ce, que** pour préparer des enveloppes de boîte (140, 240), un matériau plat (116) en forme de ruban est façonné continuellement transversalement à l'axe du ruban dans une forme tubulaire, et des sections d'enveloppe de boîte (112) sont séparés du ruban d'enveloppe de boîte, dans lequel, pour couper, une arrête d'appui (278) est prévue à l'intérieur du ruban d'enveloppe de boîte formé continuellement, qui est sensiblement fermée de façon circulaire, s'étend dans un plan normal à l'axe longitudinal du ruban d'enveloppe de boîte et coopère avec au moins un outil de coupe (279), qui, lors de la coupure en position de coupe, est tourné le long de l'arrête d'appui, de manière qu'une étendue de coupe tourne une fois autour de l'axe longitudinal tout en détachant une section du ruban d'enveloppe de boîte, dans lequel l'arrête d'appui (278) et l'au moins un outil de coupe (279) conjointement avec le ruban d'enveloppe de boîte sont avancés pendant la procédure de coupe, et l'au moins un outil de coupe (279), après la procédure de coupe, est amené à une position sans contacte avec l'arrête d'appui (278) et est retourné avec l'arrête d'appui (278) en sens inverse au mouvement de l'enveloppe de boîte à la position initiale avent la procédure de coupe.

11. Procédé selon la revendication 10, **caractérisé en ce, que** le matériau plat (116) en forme de ruban est amené en une forme raplatie avec deux sections courbées (112c), et un élément d'élargissement (273) est disposé à l'intérieur du ruban d'enveloppe de boîte, qui est relié à l'arrête d'appui (278) par un dispositif de guidage (280), et transforme le ruban d'enveloppe de boîte raplati au coupe transversale circulaire de l'arrête d'appui (278), l'élément d'élargissement (273) étant monté à deux perches de maintien (274), qui sont guidés dans les deux sections courbées (112c) du ruban raplatie d'enveloppe de boîte et s'étendent de l'élément d'élargissement (273) jusqu'à une fixation (275) dans une zone, dans laquelle le matériau plat en forme de ruban (116) est pas encore fermé.

12. Corps de boîte (148, 248) comprenant une enveloppe de boîte (140, 240), qui inclut un matériau plat (03, 116) et un joint longitudinal de laser bord à bord (124), et ayant au moins un élément de couverture (142, 242), disposé à l'enveloppe de boîte (140, 240), par une soudure de terminaison (145, 245), **caractérisé en ce, que** l'e
nveloppe de boîte (140, 240) a été pressée par une procédure de gonflement de l'intérieur vers une moule extérieure (146, 246),
des surfaces de contact de soudures adaptées l'une à l'autre de l'enveloppe de boîte (140, 240) et de l'élément de couverture (142, 242) sont formées comme des régions de bord (140a, 142a, 240a, 242a) évasées ou rétrécies en direction de l'axe de boîte, fermées de forme annulaire,
une des surfaces frontales (140b, 142b, 240b, 242b) des deux régions de bord (140a, 142a, 240a, 242a) est située à l'intérieur, et une autre à l'extérieur du corps de boîte (148, 248), et
la soudure de terminaison (145, 245) est formée entre les surfaces de contact de soudure étant mis en position adjacent, qui contactent l'une à l'autre sans de l'aire.

13. Corps de boîte (148, 248) selon la revendication 12, **caractérisé en ce, que** des régions de bord (140a, 60a, 240a) sont formées aux deux côtés frontaux de l'enveloppe de boîte (140, 24, 240) rétrécies vers les surfaces frontales (140b, 240b), sur chacune desquelles un élément de couverture (142, 31 a, 31 b, 242) est fixé par une soudure de terminaison (145, 42, 245), dans lequel avec les deux éléments de couverture (142, 31 a, 31 b, 242) les surfaces frontales de bord (140b, 240b) de l'enveloppe de boîte (140, 24, 240) sont situées à l'intérieur, et les surfaces frontales (142b, 242b) des éléments de couverture (142, 31 a, 31 b) sont situées à l'extérieur du corps de boîte (148, 248).

14. Corps de boîte (148, 248) selon la revendication 12 ou 13, **caractérisé en ce, que** l'enveloppe de boîte (140, 240), à son côté interne comprend une feuille interne (105), et l'au moins un élément de couverture (142, 242) à son côté interne comprend un revêtement interne synthétique, et un pont de joint (267) entre la feuille intérieure (105) et le revêtement interne (153, 253), le pont de joint (267) recouvrant la surface frontale de bord (140b, 142b, 240b) située à l'intérieur de la boîte et, le cas échéant, la soudure de terminaison (145, 42, 245) aussi.

15. Corps de boîte (148, 248) selon une quelconque des revendications 12 à 14, **caractérisé en ce, que** le corps de boîte (148, 248) est formé comme une bombe à aérosol (156) ayant deux éléments de couverture (31 a, 31 b, 142, 242), l'un des éléments de couverture (31 b, 142, 242) comprenant un fond, et l'autre élément de couverture (31 a, 142, 242) comprenant un siège de soupape ou un soupape (62), un couvercle de fond (242') étant, de préférence, disposé à l'extérieur du fond, qui en particulier couvre la soudure de terminaison (145, 245).

16. Corps de boîte (148, 248) selon une quelconque des revendications 12 à 14, **caractérisé en ce, que** le corps de boîte (148, 248) est formé comme une canette alimentaire (156) ayant deux éléments de couverture (157, 159), l'un des éléments de couverture (157) comprenant un dispositif d'arrachement (158), et l'autre élément de couverture (159) comprenant une ouverture de remplissage à fermer, ou que le corps de boîte (148, 248) est formé comme une bouteille de boisson (162), dans laquelle l'un des éléments de couverture (164) comprend une ouverture filetée (165) et l'autre élément de couverture (163) comprend un fond.

17. Dispositif pour exécuter un procédé selon une quelconque des revendications 1 à 11, ledit dispositif rendant préparable une enveloppe de boîte (140, 240) fermée par une première connexion à partir d'un matériau plat (103, 116) et rendant fixable au moins un élément de couverture (142, 242) par une autre connexion à l'enveloppe fermée de boîte, et à ce fin comprend une fixation de soudage (243) et une source de laser (231), ladite fixation de soudage (243) rendant rotatif au moins un élément de couverture (142, 242) et une enveloppe de boîte (140, 240), et la source de laser (231), en tournant ces deux parties, rend soudable une soudure de terminaison (145, 245) annulaire fermée, **caractérisé en ce, que** le dispositif comprend une moule extérieure (146, 246), et l'enveloppe de boîte (140, 240) peut être pressée de l'intérieur contre ladite moule extérieur (146, 246) par une procédure de gonflage, dans lequel au moins les régions de bord (140a, 240a), chez les côtés frontaux, sont formé de manière, que ceux-ci, comme des surfaces de contact de soudure de l'enveloppe de boîte (140, 240) diffèrent d'une forme cylindrique et forment des régions de bord (140a, 142a, 240a, 242a) évasées ou rétrécies en direction de l'axe de boîte, fermées de forme annulaire;
de manière que des surfaces de contact de soudure de l'enveloppe de boîte (140, 240) et des surfaces de contact de soudure de l'élément de couverture (142, 242) formées d'une façon correspondante contactent l'une à l'autre, quand la fixation de soudage (243) presse l'au moins un élément de couverture (142, 242) vers un côté frontal de l'enveloppe de boîte (140, 240) jusqu'à le contact mutuel, où une des deux surfaces frontales (140b, 142b, 240b, 242b) des deux régions de bord (140a, 142a, 240a, 242a) étant située à l'intérieur, et une de ces surfaces étant située à l'extérieur du corps de boîte (148, 248).

18. Dispositif selon la revendication 17, **caractérisé en ce, qu'**un élément de tuyau dilatable par un liquide sous pression peut être mû pour la procédure de gonflement vers l'intérieur de l'enveloppe de boîte (140, 240), peut être pressé par une alimentation en liquide sous pression conjointement avec la paroi de boîte (140, 240) contre la moule extérieur, et peut être séparé de nouveau de l'enveloppe de boîte (140, 240) après la décharge du liquide sous pression.

19. Dispositif selon la revendication 17 ou 18, **caractérisé en ce, que** le dispositif rend l'enveloppe de boîte (140, 240) insérable dans la moule extérieure (146, 246) avant le soudage de la soudure de terminaison (145, 245), dans lequel on forme de préférence au moins une région de bord (140a, 240a) à un côté frontal, le cas échéant une région d'engrènement (240c) pour un couvercle de boîte, et en particulier des structures de décor (240d).

20. Dispositif selon une quelconque des revendications 17 à 19, **caractérisé en ce, que** pour la préparation de l'enveloppe de boîte (140, 240) fermée, un dispositif de façonnage rend continuellement façonnable un matériau plat (103, 116) en forme de ruban continuellement transversalement à l'axe du ruban dans une forme tubulaire, un dispositif de soudage (231) rend soudable un joint longitudinal, et un dispositif de séparation rend séparable des sections d'enveloppe de boîte (112), une arrête d'appui (278) tenue par le dispositif de façonnage sensiblement fermée de manière circulaire, et étant disposée à l'intérieur d'un ruban d'enveloppe de boîte formé d'une façon continuelle s'étend dans un plan normal à l'axe longitudinal de ruban d'enveloppe de boîte, contacte directement le côté intérieur du ruban d'enveloppe de boîte et coopère avec au moins un outil de coupe (279), qui, lors de la coupure en position de coupe, peut être tourné le long de l'arrête d'appui, de façon qu'une région de coupe tourne une fois autour l'axe longitudinal tout en séparant une section du ruban d'enveloppe de boîte, dans lequel l'arrête d'appui (278) et l'au moins un outil de coupe (279) peuvent être avancés conjointement avec le ruban d'enveloppe de boîte et l'au moins un outil de coupe (279), après la procédure de coupe, peut être mû à une position sans contacte avec l'arrête d'appui (278) et avec l'arrête d'appui (278) en sens inverse au mouvement de l'enveloppe de boîte à la position initiale avent la procédure de coupe.
